# EUROPEAN PATENT APPLICATION

(11) **EP 4 738 788 A1**
(43) Date of publication of application: **06.05.2026**
(21) Application number: 24762565.0
(22) Date of filing: 09.08.2024
(51) Int. Cl.: H04L 49/00

(54) **PACKET PROCESSING METHOD AND APPARATUS, RESOURCE MANAGEMENT METHOD, APPARATUS AND DEVICE**

(71) Applicant: New H3C Technologies Co., Ltd., Hangzhou, Zhejiang 310052 (CN)
(72) Inventor: ZHANG, Tao, Beijing 100102 (CN); FAN, Chi, Beijing 100102 (CN); WANG, Wei, Beijing 100102 (CN)
(74) Representative: 2SPL Patentanwälte PartG mbB
(86) International application number: PCT/CN2024/110957
(87) International publication number: WO 2026/031152

(57) **Abstract**

The present disclosure provides a packet processing method and apparatus, a resource management method and apparatus, and a device. The packet processing method includes: determining identity information of the member device in the cloud cluster switch; in response to determining that the identity information indicates that the member device is a first NCP and a first protocol packet transmitted by a server is received through a first port, adding local port information of the first port to the first protocol packet to obtain a second protocol packet, and transmitting the second protocol packet to an NCC; and in response to determining that the identity information indicates that the member device is an NCC and the second protocol packet is received, determining global port information of the first port based on the local port information of the first port; establishing a first forwarding entry, where the first forwarding entry includes address information of the server in the first protocol packet and the global port information of the first port; transmitting the first forwarding entry to the first NCP, such that the first NCP, upon receiving a data packet with a destination address being the address information of the server, queries the first forwarding entry based on the destination address to obtain the global port information of the first port, and transmits the data packet through the first port. Through the solution of the present disclosure, forwarding latency is reduced, traffic loss is minimized, and service quality is improved.

## Description

### TECHNICAL FIELD

The present disclosure relates to the technical field of communications, and in particular to packet processing methods and apparatuses, resource management methods and apparatuses, and devices.

### BACKGROUND

Data Center (DC) is a facility for integrated storage, processing, and distribution of data. DC includes a server, a storage device, and a network device, etc., which is used to provide various computing and storage services. Data Center Interconnect (DCI) is a facility for connecting DCs. DCI is used to achieve high-speed, reliable, and secure communication between DCs, to meet the high bandwidth and low latency requirements for data and applications.

With rapid development of the Internet, cloud service, big data and AI technology, the traffic of a DC network rapidly increases, which causes tremendous pressure on the network device of the DC network. For example, the development and application of Artificial Intelligence Generated Content (AIGC) has a characteristic of high computational amount, where from text and image generation to audio and video generation, the computational amount and traffic grow exponentially.

For a network device in a DC network, the network device includes a main control board, an interface board, and a network board. Due to the hardware structure limitation of the network device, that is, the number of main control boards, interface boards, and network boards carried is limited, and it is not possible to expand the capacity of the main control boards, interface boards, and network boards. Based on this, when there is a significant increase in traffic, the network device cannot meet a forwarding requirement of a large amount of traffic, resulting in problems such as increased latency and traffic loss.

### SUMMARY

The present disclosure provides a packet processing method, applied to a member device in a cloud cluster switch, where the member device includes an NCC, an NCF or an NCP, and the method includes:
determining identity information of the member device in the cloud cluster switch;
in response to determining that the identity information indicates that the member device is a first NCP and a first protocol packet transmitted by a server is received through a first port, adding local port information of the first port to the first protocol packet to obtain a second protocol packet, and transmitting the second protocol packet to an NCC; and
in response to determining that the identity information indicates that the member device is an NCC and the second protocol packet is received, determining global port information of the first port based on the local port information of the first port; establishing a first forwarding entry, where the first forwarding entry includes address information of the server in the first protocol packet and the global port information of the first port; transmitting the first forwarding entry to the first NCP, such that the first NCP, upon receiving a data packet with a destination address being the address information of the server, queries the first forwarding entry based on the destination address to obtain the global port information of the first port, and transmits the data packet through the first port.

The present disclosure provides a resource management method including:
obtaining target resource data of a cloud cluster switch, where the target resource data includes one or more of network element-level resource data, network-level resource data, application-level resource data, or service resource data;
obtaining initial demand resource information of a user, where the initial demand resource information represents expected occupied resources;
determining, based on the target resource data and the initial demand resource information, target demand resource information of the user, where the target demand resource information represents resources actually allocated to the user; and
transmitting the target demand resource information to the cloud cluster switch, such that the cloud cluster switch allocates available resources to the user based on the target demand resource information when receiving a data packet for the user, and processes the data packet based on the available resources.

The present disclosure provides a packet processing apparatus, applied to a member device in a cloud cluster switch, where the member device includes an NCC, an NCF or an NCP, and the apparatus includes:
a determining module, a receiving module, a processing module, and a transmitting module; where
the determining module is configured to determine identity information of the member device in the cloud cluster switch;
where in a case that the identity information indicates that the member device is a first NCP,
the receiving module is configured to receive a first protocol packet transmitted by a server through a first port;
the processing module is configured to add local port information of the first port into the first protocol packet to obtain a second protocol packet;
the transmitting module is configured to transmit the second protocol packet to an NCC;
where in a case that the identity information indicates that the member device is an NCC,
the receiving module is configured to receive the second protocol packet;
the processing module is configured to determine global port information of the first port based on the local port information of the first port; and establish a first forwarding entry, where the first forwarding entry includes address information of the server in the first protocol packet and the global port information of the first port; and
the transmitting module is configured to transmit the first forwarding entry to the first NCP, such that upon receiving a data packet with a destination address being the address information of the server, the first NCP queries the first forwarding entry based on the destination address to obtain the global port information of the first port, and transmits the data packet through the first port.

The present disclosure provides a resource management apparatus including:
an obtaining module, configured to obtain target resource data of a cloud cluster switch, where the target resource data includes one or more of network element-level resource data, network-level resource data, application-level resource data, or service resource data; and obtain initial demand resource information of a user, where the initial demand resource information represents expected occupied resources;
a determining module, configured to determine, based on the target resource data and the initial demand resource information, target demand resource information of the user, where the target demand resource information represents resources actually allocated to the user; and
a processing module, configured to transmit the target demand resource information to the cloud cluster switch, such that the cloud cluster switch allocates available resources to the user based on the target demand resource information when receiving a data packet for the user, and processes the data packet based on the available resources.

The present disclosure provides a member device in a cloud cluster switch, where the member device is an NCC, an NCF or an NCP, and includes: one or more processors and one or more machine-readable storage media, where the one or more machine-readable storage media store machine executable instruction that can be executed by the one or more processors, and the one or more processors execute the machine executable instructions to implement the packet processing method according to the above example in the present disclosure.

The present disclosure provides a management device, including: one or more processors and one or more machine-readable storage media, where the one or more machine-readable storage media store machine executable instructions that can be executed by the one or more processors, and the one or more processors execute the machine executable instructions to implement the resource management method according to the above example of the present disclosure.

The present disclosure provides a computer program product including a computer program that, when executed by a processor, implements a packet processing method or a resource management method.

The present disclosure provides a machine-readable storage medium that stores machine executable instructions that can be executed by a processor; where the processor is used to execute the machine executable instructions to implement the packet processing method or resource management method mentioned above.

From the above technical solutions, it can be seen that in the embodiments of the present disclosure, a cloud cluster switch is deployed in a DC network, where the cloud cluster switch includes an NCC (Network Cloud Controller), an NCF (Network Cloud Forwarder), and an NCP (Network Cloud Packet). The NCCs, NCFs, and NCPs are independent devices, and the NCCs, NCFs, and NCPs in a cluster switch can be scaled out or scaled in. When the traffic increases significantly, by scaling out, the cloud cluster switch meets the forwarding needs of a large amount of traffic, to reduce forwarding latency, minimize traffic packet loss, and improve the service quality of the DC network.

### BRIEF DESCRIPTION OF DRAWINGS

FIG. 1 is a structural schematic diagram of a DC network according to an embodiment.
FIG. 2 is a schematic diagram of a topology structure of a cloud cluster switch according to an embodiment.
FIG. 3A is a schematic diagram of a cloud cluster platform component according to an embodiment.
FIG. 3B is a schematic diagram of a cloud cluster platform component according to an embodiment.
FIG. 4 is a schematic diagram of a registration process for a member device according to an embodiment.
FIG. 5 is a flowchart of a packet processing method according to an embodiment.
FIG. 6 is a flowchart of a resource management method according to an embodiment.
FIG. 7A is a schematic diagram of a networking structure of cloud cluster switches according to an embodiment.
FIG. 7B is a schematic diagram of health monitoring, analysis, adjustment and optimization for an AI network according to an embodiment.
FIG. 8A is a structural schematic diagram of a packet processing apparatus according to an embodiment.
FIG. 8B is a structural schematic diagram of a resource management apparatus according to an embodiment.
FIG. 9 is a hardware structure diagram of an electronic device according to an embodiment of the present disclosure.

### DETAILED DESCRIPTION

With rapid development of the Internet, cloud service, big data and AI technology, the traffic of a DC network rapidly increases, which causes tremendous pressure on the network device of the DC network. Especially with the development and application of AIGC, the computational amount and traffic grow exponentially. For example, if the number of parameters for an AI large model reaches trillions and the size of the training dataset reaches terabytes, it requires an interconnection of Graphics Processing Units (GPUs) at the level of tens of thousands of cards to achieve pre-training of the model, resulting in a huge scale and complex connections for the DC network.

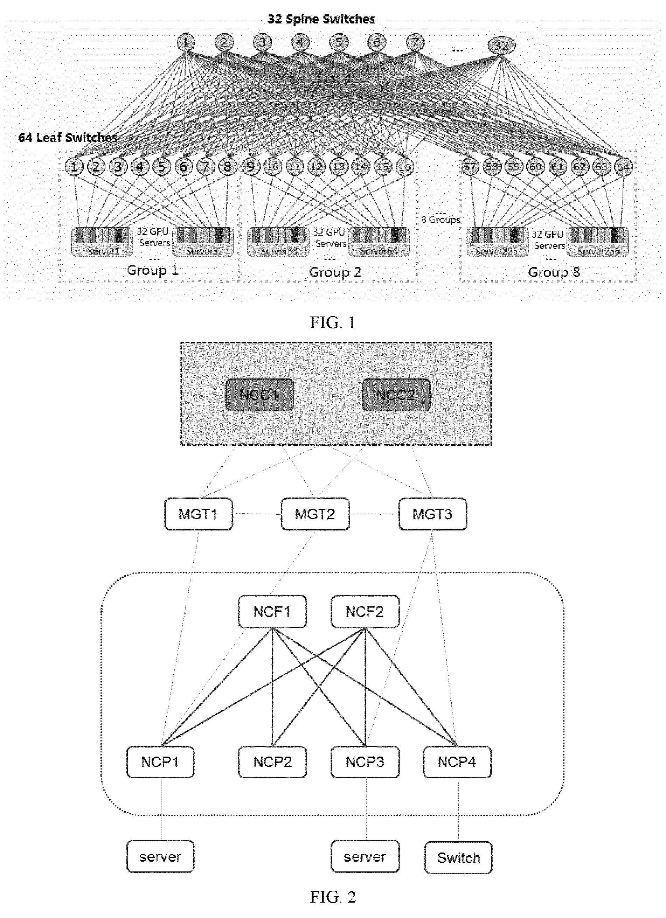

As shown in FIG. 1, FIG. 1 is a structural schematic diagram a DC network. The DC network includes a large number of Spine Switches and Leaf Switches, with 32 Spine Switches and 64 Leaf Switches taken as an example in FIG. 1. Servers (such as GPUs) are connected through Leaf Switches, and then various Leaf Switches are connected through Spine Switches, to perform data exchange between servers.

For network devices (such as Spine Switches and Leaf Switches) in a DC network, a network device includes a main control board, an interface board, and a network board. Due to the hardware structure limitation of the network device, and it is not possible to expand the capacity of the main control board, the interface board, and the network board. Based on this, when there is a significant increase in traffic, the network device cannot meet a forwarding requirement of a large amount of traffic, resulting in problems such as increased latency and traffic loss.

To meet the forwarding needs of a large amount of traffic, a large number of network devices are deployed, such as 32 Spine Switches and 64 Leaf Switches. When a large number of network devices are deployed, traffic congestion can also occur between different network devices, and traffic congestion can lead to a decrease in server computing power. For example, traffic congestion between Spine Switches leads to a 30% decrease in computing power, resulting in wastage of server computing resources.

In view of the above findings, this embodiment proposes a cloud cluster switch, which can be deployed in the DC network and replace the switch networking architecture (Spine Switches and Leaf Switches) of the DC network through the cloud cluster switch, to meet the development needs of the Internet, cloud services, big data and AI technology.

The cloud cluster switch includes Network Cloud Controller (NCC), Network Cloud Forwarder (NCF), and Network Cloud Packet forwarder (NCP). The cloud cluster switch is a network device externally, and the NCC, NCF, and NCP inside the cloud cluster switch are independent devices, and the NCC, NCF, and NCP inside the cloud cluster switch can be scaled out. By scaling out, the cloud cluster switch can meet the forwarding needs of a large amount of traffic, to reduce forwarding latency, minimize traffic packet loss, and improve the service quality of the DC network.

Only a small number of cloud cluster switches need to be deployed to meet the forwarding needs of a large amount of traffic, reduce traffic congestion between cloud cluster switches, improve server computing power, and save server computing resources.

The technical solution for the cloud cluster switch in this embodiment can involve the following aspects.

First, the physical decoupling of the form of the network device.

In related arts, network devices (such as switches, etc.) are mainly framed devices, that is, the network device includes a main control board, an interface board, and a network board, where the main control board, the interface board, and the network board are physically connected in a frame, and the network device adopts a centralized architecture, and a large number of network devices are deployed in the DC network. However, when deploying this type of network device in the DC network for an AI scenario, there may be the following problems: poor scalability: network devices have limited scalability and need to be expanded by adding more network devices, which may lead to network complexity. In addition, the data flow model of the DC network in the AI scenario is complex and varied, and a large number of network devices can cause network congestion, requiring rapid and timely adjustment for corresponding devices and link bandwidth. Poor fault redundancy: once the network device fails, locating and replacing are very complex, which may affect the normal operation of the entire DC network.

In order to adapt to AI scenarios, in this embodiment, a cloud cluster switch is introduced in the DC network. The cloud cluster replaces the main control board, the interface board, and the network board with multiple box switches (i.e., independent devices).

The cloud cluster switch can adopt a distributed architecture, replacing the backplane bus with a management network, that is, connecting the various box switches of the cloud cluster switch through the management network. The ability to integrate various box switches of the cloud cluster switch into one device enhances the scalability of the cloud cluster switch.

By adding a device management function to achieve rapid scale-out for the DC network, it has good scalability. The cloud cluster switch has good fault isolation capability, where once a box switch fails, the box switch can be isolated in a timely manner without affecting the operation of the entire DC network. The flexibility of the cloud cluster switch is high, where the cloud cluster switch has a flexible structure and can be flexibly configured and deployed according to the service requirements of the AI scenario.

The cloud cluster switch can include NCC(s) (such as one or more NCCs), NCF(s) (such as one or more NCFs), and NCP(s) (such as multiple NCPs). Within the cloud cluster switch, an NCC can be connected to an NCF, an NCC can be connected to each NCP separately, and an NCF can be connected to each NCP separately.

An NCC can be a box switch, which realizes the function of NCC through the box switch, and the NCC corresponds to the main control board of the box switch. The NCC is the Network Cloud Controller, responsible for managing and controlling the various member devices and network operation status within the cloud cluster switch. The NCC is responsible for the allocation and monitoring of network resources to ensure the stable and secure operation of the entire cloud cluster switch.

An NCF can be a box switch, which implements the functions of NCF through the box switch, and the NCF corresponds to the network board (switching network board) of the box switch. The NCF is a Network Cloud Forwarder, responsible for forwarding packets across NCPs, that is, forwarding packets from one NCP to another NCP.

An NCP can be a box switch, which realizes the function of NCP through the box switch, and the NCP corresponds to the interface board of the box switch. The NCP (Network Cloud Packet forwarder) is an access device of the cloud cluster switch, responsible for accessing various types of servers, such as GPU servers, and forwarding packets of a server.

Second, the physical connection structure based on the cloud cluster switch.

As shown in FIG. 2, FIG. 2 is a schematic diagram of a topology structure of a cloud cluster switch. The cloud cluster switch can include NCCs, NCFs, and NCPs. Within the cloud cluster switch, an NCC can be connected to an NCF, an NCC can be connected to each NCP separately, and an NCF can be connected to each NCP separately.

In FIG. 2, two NCCs (NCC1 and NCC2), two NCFs (NCF1 and NCF2), and four NCPs (NCP1, NCP2, NCP3, and NCP4) are taken as an example for illustration.

NCCs, NCFs, and NCPs are independent physical devices (such as box switches) that are connected together through a Multi Gigabit Transceiver (MGT) in a network to form a cloud cluster switch, where the cloud cluster switch appears as a physical device to the outside world.

The MGT is the management network for the cloud cluster switch. In FIG. 2, taking three MGTs (MGT1, MGT2, and MGT3) as an example, MGTs can be implemented through a layer three switch or other devices, which is not limited in the present disclosure. The MGTs supports routing protocols and multicast protocols, physically connecting NCCs, NCFs, and NCPs.

As shown in FIG. 2, an NCC is connected to each NCP through MGTs, an NCC is connected to each NCF through MGTs (this connection relationship is not shown in FIG. 2), and an NCF is directly connected to each NCP.

The NCP is responsible for connecting various types of servers. In FIG. 2, NCP1 connects to a server, NCP3 connects to a server, NCP4 connects to a Switch, and the Switch can connect to multiple servers.

As shown in FIG. 2, the NCCs, MGTs, and NCPs form an Inter Process Communication network, such as LIPC (Leopard Inter Process Communication) network, and the NCPs are managed through the LIPC communication protocol. The NCFs and NCPs form a CELL forwarding data network, for forwarding data packets from various NCPs. The NCPs and servers form a service network, and NCPs can connect various servers or hang switches.

In an example, multiple distributed box switches can be combined into a cloud cluster switch, that is, multiple box switches can be combined into a switch (referred to as a cloud cluster switch) through a way of a cloud cluster. The cloud cluster is a software virtualization technology that achieves decoupling between an application and a physical device based on a containerized architecture. The cloud cluster is divided into two levels: a physical cluster at the device-level and a container cluster at the application-level.

For the physical cluster at the device-level, multiple physical devices (such as multiple box switches) can be connected together, and after configuration, the physical devices can be virtualized into one device (cloud cluster switch).

This virtualization technology can integrate the hardware resources of multiple physical devices, which achieves unified management and allocation of hardware resources of multiple physical devices, improves resource utilization rate, and reduces management difficulty. This virtualization technology can further achieve hardware-level backup and improve the high reliability of the entire system.

For the container cluster at the application-level, containers running on physical devices can be logically connected together, and after configuration, the containers can be virtualized into a system. This virtualization technology can integrate the software processing capabilities of multiple containers, which enables collaborative work, unified management, and uninterrupted maintenance of multiple containers.

Third, the composition of NCCs, NCFs, and NCPs, and cloud cluster platform components.

For each member device (such as NCC, NCF, or NCP) of the cloud cluster switch, the member device can use a specified operating system (such as Linux operating system, etc.) and deploy cloud cluster platform (also referred to as cloud platform) components on the specified operating system. Through container-based virtualization technology, it is possible to separate the management function and the service function of the member device, which enables the management function and the service function to operate independently.

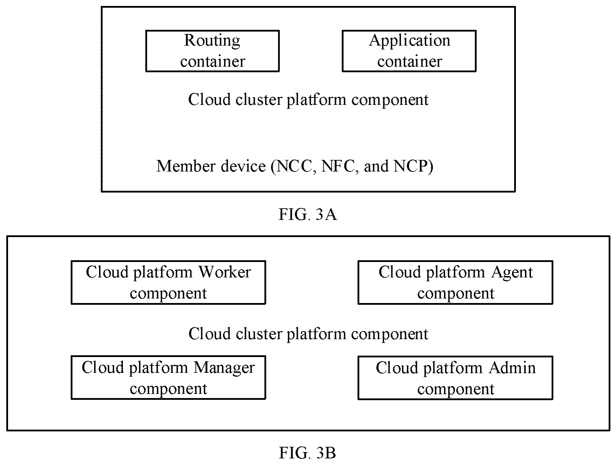

As shown in FIG. 3A, FIG. 3A is a schematic diagram of the cloud cluster platform components. The cloud cluster platform components can include a routing container and an application container, with the management function implemented through the routing container and the service function implemented through the application container. For example, for each service function, an application container can be deployed separately for the service function.

As shown in FIG. 3B, FIG. 3B is a schematic diagram of the cloud cluster platform components. The cloud cluster platform components can be divided, based on roles, into the following four components: the cloud platform Worker component, which runs on each member device; the cloud platform Manager component, which runs on each cluster management node (i.e., each of one or more management nodes for all member devices); the cloud platform Agent component, which runs inside the application container; and the cloud platform Admin component, which runs on each member device and is configured to receive and process configuration messages.

The cloud platform Manager component runs within the host operating system of each member device participating in cluster management, and is responsible for cloud platform high availability (HA) function, establishing clusters, and managing cluster members. The cloud platform Manager component is responsible for managing physical clusters, establishing physical clusters, maintaining physical clusters, managing cluster members, and generating and updating cluster topology. The cloud platform Manager component is responsible for managing container clusters, able to intelligently deploy application containers based on the distribution of hardware resources in the physical cluster, and elects primary containers and secondary containers for the container cluster.

The cloud platform Worker component runs within the host operating system of each member device, is responsible for managing the lifecycle of member devices and containers, periodically reports the physical resources and statuses of member devices, responds to scheduling instructions from the cloud platform Manager component, and creates and runs containers based on instructions from the cloud platform Manager component.

The cloud platform Admin component runs on each member device. The cloud platform Admin component can receive and process configuration messages from the primary application container. The cloud platform Admin component is responsible for managing device operating modes and container description files, and transmitting requests to execute container deployment to the cloud platform Manager component.

The cloud platform Agent component runs inside the container and is configured to report the health status (such as normal status or abnormal status) of the service in the container, and notifies the service module of the cluster and container events.

In an example, the cloud cluster platform components of various member devices (such as NCCs, NCFs, and NCPs) can discover and communicate with each other through routing containers and management network connections. The role of a routing container is to connect all member devices through LIPC communication for topology discovery of each member device, logically forming an integrated device that supports routing characteristics (such as Interior Gateway Protocol, IGP) and multicast characteristics.

For topology discovery and maintenance, based on routing characteristics (such as IGP), neighbors can be established based on the link-local addresses of member devices, and the link-local addresses can be mutually informed as device addresses. Routing management reports the link-local addresses and performs topology detection and management based on the link-local addresses.

For inter process communication (IPC) interaction between containers, application containers and routing containers can perform IPC interaction to meet query management and LIPC transmission of the application container itself.

Fourth, the start and topology establishment process of each member device within the cloud cluster switch.

In an example, regarding the connection topology of the cloud cluster switch (i.e., the physical cluster). The control packet of the cloud cluster switch is a layer three IP (Internet Protocol) packet, and the IP address of each member device in the cloud cluster switch is configured in the same network segment. The IP address information can be automatically obtained through Dynamic Host Configuration Protocol (DHCP), and the network segment can be used to interact with the control packet of the cloud cluster switch.

The connection topology of the cloud cluster switch can be completed by star connections. The star connections have low requirements for the physical location of each member device and are suitable for networking with dispersed physical locations of member devices. When using star connections to complete the connection topology of the cloud cluster switch, intermediate devices can also be used to complete the interconnection between member devices.

After each member device is powered on, the cloud platform Worker component, the cloud platform Admin component, and the cloud platform Agent component can automatically run. The cloud platform Manager component is an optional component, which can run or not.

For example, when a member device needs to participate in the management of a physical cluster, the role of the member device can be configured as manager+worker, and then the member device will run the cloud platform Manager component.

In an example, regarding establishment of the cloud cluster switch (i.e., the physical cluster), when establishing a cloud cluster switch, the identity of each member device is determined by a configuration file. For example, a member device can obtain the identity information of the member device from the configuration file, where the identity information indicates that the member device is NCP, NCF, or NCC.

When establishing a cluster switch, it is also necessary to complete cluster planning. such as which member device participate in the management of the cloud cluster switch, which member device serves as the leader of the cloud cluster switch (i.e., selecting one NCC from all NCCs as the leader), the number of each member device, and the network segment used for internal communication within the cloud cluster switch. During the cluster planning process, the above content can be written into the configuration file.

For each member device, the member device can start the cloud platform Worker component, cloud platform Admin component, and cloud platform Manager component according to the configuration file. The cloud platform Manager component is elected as the Leader, and the cloud platform Worker component establishes an internal communication channel with the Leader, and the cloud platform Worker component registers with the Leader and reports hardware resource information. The Leader notifies the cloud platform Worker component to start the container.

In an example, after each member device in the cloud cluster switch is started, a member device determines the identity information of the member device in the cloud cluster switch. The identity information indicates that the member device is an NCP (in the subsequent process, the NCP can be distinguished as the first NCP or the second NCP), or the identity information indicates that the member device is an NCF, or, the identity information indicates that the member device is an NCC.

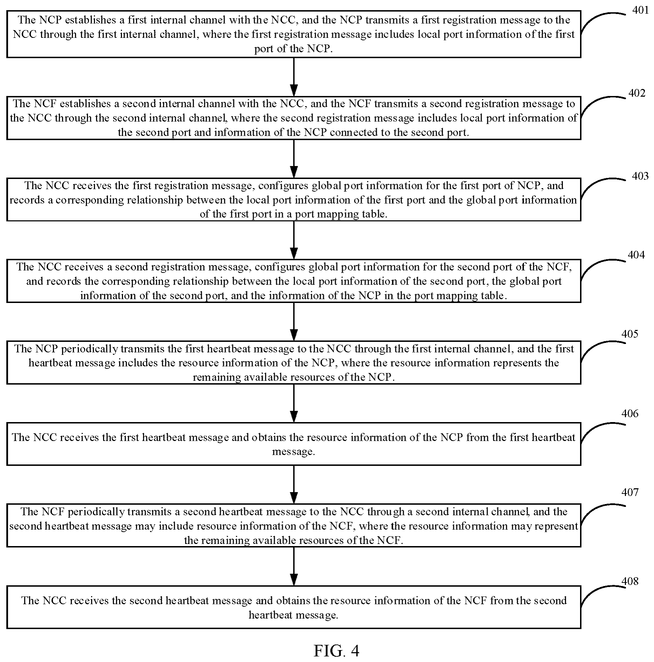

After obtaining the identity information of each member device, operations corresponding to the identity information can be performed. As shown in FIG. 4, FIG. 4 is a schematic diagram of the registration process for each member device, the registration process may include steps 401 to 408.

In step 401, for each NCP (whose identity information indicates that the member device is an NCP, such as the first NCP and the second NCP), the NCP establishes a first internal channel with the NCC. The NCP transmits a first registration message to the NCC through the first internal channel, where the first registration message includes local port information of the first port of the NCP.

In an example, during topology discovery and maintenance, a neighbor can be established based on the IP address (such as a link-local address of the member device, so the NCP can obtain the IP address of the NCC. The first internal channel is established based on the IP addresses of the NCP and the NCC, where the first internal channel includes these two IP addresses.

Based on the IP address of the NCC in the first internal channel, the NCP can transmit a message to the NCC through the first internal channel. Based on the IP address of the NCP in the first internal channel, the NCC can transmit a message to the NCP through the first internal channel. In this way, the NCP and the NCC can transmit messages to each other through the first internal channel.

The first internal channel is the transmission channel between the NCP and the NCC. As the transmission channel between member devices is within the cluster switch, the transmission channel is referred to as the first internal channel. The first internal channel is any type of channel, as long as the NCP and the NCC can transmit messages to each other, which is not limited.

The NCP can include multiple ports (referred to as the first ports), and the NCP connects to the server through the first port, that is, NCP can receive packets transmitted by the server through the first port.

For each first port of the NCP, the local port information of the first port indicates which port on the NCP the first port is. For example, the local port information can be a port identifier or other information that uniquely represents the first port, and there are no restrictions on the local port information.

The local port information of the first port is only valid in this NCP, that is, an NCP knows which port on the NCP the first port is based on the local port information of the first port. The local port information of the first port is not valid for other member devices except the NCP. The reason is that the local port information of different member devices may be the same. If the local port information of the first port is valid for all member devices, it will cause the local port information to be duplicated, resulting in the inability to transmit data packets based on the local port information of the first port.

In an example, the NCP transmits a first registration message to the NCC through the first internal channel, where the first registration message includes local port information of all first ports of the NCP. For example, assuming that the NCP includes three first ports, the first registration message can include local port information a1 for first port 1, local port information a2 for first port 2, and local port information a3 for first port 3.

In step 402, for each NCF (whose identity information indicates that the member device is an NCF), the NCF establishes a second internal channel with the NCC. The NCF transmits a second registration message to the NCC through the second internal channel, where the second registration message includes local port information of the second port and information of the NCP connected to the second port.

In an example, the NCF can obtain the IP address of the NCC. The second internal channel is established based on the IP addresses of the NCF and the NCC, where the second internal channel includes these two IP addresses.

Based on the IP address of the NCC in the second internal channel, the NCF can transmit a message to the NCC through the second internal channel. Based on the IP address of the NCF in the second internal channel, the NCC can transmit a message to the NCF through the second internal channel. In this way, the NCF and the NCC can transmit messages to each other through the second internal channel.

The second internal channel is the transmission channel between the NCF and the NCC. As the transmission channel between member devices is within the cluster switch, the transmission channel is referred to as the second internal channel. The second internal channel is any type of channel, as long as the NCF and the NCC can transmit messages to each other, which is not limited.

The NCF can include multiple ports (referred to as second ports), and the NCF is connected to NCPs through each second port, that is, the NCF can receive packets transmitted by the NCP through the second port.

For each second port of the NCF, the local port information of the second port indicates which port on the NCF the second port is. For example, the local port information can be a port identifier or other information that uniquely represents the second port, and there are no restrictions on the local port information. The local port information of the second port is only valid in this NCF, that is, the NCF knows which port on the NCF the second port is based on the local port information. The local port information of the second port is not valid on other member devices except this NCF.

In an example, during topology discovery and maintenance, for each second port, the NCF can obtain information (such as the IP address of the NCP) of the NCP connected to that second port. For example, when the NCF establishes a neighbor with the NCP through the second port, it can obtain information about the NCP connected to the second port.

In an example, when the NCF transmits a second registration message, the second registration message includes local port information of the second port and information about the NCP connected to the second port. For example, assuming that the NCF includes three second ports, the second registration message includes the local port information b1 of second port 1 and the IP address of NCP1 connected to second port 1, the local port information b2 of second port 2 and the IP address of NCP2 connected to second port 2, the local port information b3 of second port 3, and the IP address of NCP3 connected to second port 3.

In step 403, for each NCC (whose identity information indicates that the member device is an NCC), the NCC receives the first registration message, configures global port information for the first port of NCP, and records a corresponding relationship between the local port information of the first port and the global port information of the first port in a port mapping table.

In an example, for local port information of each first port carried in the first registration message, the NCC can generate global port information based on the local port information, i.e., configure the global port information for the first port. The global port information is valid for all member devices, i.e., is unique for all member devices.

For example, based on the local port information a1 of the first port 1 carried in the first registration message, the NCC can generate global port information a1' for the first port 1. When generating the global port information a1', a certain algorithm can be used to operate on the local port information a1 to obtain the global port information a1'. For example, a random number can be generated and the random number can be combined with the local port information a1 to obtain the global port information a1'.

Of course, the above is only an example of generating global port information a1', which is not limited, as long as the global port information a1' can be generated based on the local port information a1, and the global port information a1' has uniqueness.

Based on the local port information a2 of the first port 2 carried in the first registration message, the NCC can generate global port information a2' for the first port 2. Based on the local port information a3 of the first port 3 carried in the first registration message, the NCC can generate global port information a3' for the first port 3.

In an example, the NCC can record the corresponding relationship between the local port information of the first port and the global port information of the first port in the port mapping table, as shown in Table 1. Table 1 is an example of the port mapping table.

**Table 1**

| Local port information of the first port | Global port information of the first port |
|---|---|
| Local port information a1 | Global port information a1' |
| Local port information a2 | Global port information a2' |
| Local port information a3 | Global port information a3' |
| ... | ... |

In step 404, for each NCC (whose identity information indicates that the member device is an NCC), the NCC receives a second registration message, configures global port information for the second port of the NCF, and records the corresponding relationship between the local port information of the second port, the global port information of the second port, and the information of the NCP in the port mapping table.

In an example, for local port information of each second port carried in the second registration message, the NCC can generate global port information based on the local port information, i.e., configure the global port information for the second port. The global port information is valid for all member devices, i.e., is unique for all member devices.

For example, based on the local port information b1 of the second port 1 carried in the second registration message, the NCC can generate global port information b1' for the second port 1. When generating the global port information b1', a certain algorithm can be used to operate on the local port information b1 to obtain the global port information b1'. For example, a random number can be generated and the random number can be combined with the local port information b1 to obtain the global port information b1'.

Of course, the above is only an example of generating global port information b1', which is not limited, as long as the global port information b1' can be generated based on the local port information b1, and the global port information b1' has uniqueness.

Based on the local port information b2 of the second port 2 carried in the second registration message, the NCC can generate global port information b2' for the second port 2. Based on the local port information b3 of the second port 3 carried in the second registration message, the NCC can generate global port information b3' for the second port 3.

In an example, the NCC can record the corresponding relationship between the local port information of the second port, the global port information of the second port, and the information of the NCP (such as the IP address of the NCP connected to the second port, obtained from the second registration message) in the port mapping table, as shown in Table 2. Table 2 is an example of the port mapping table.

**Table 2**

| Local port information of the second port | Global port information of the second port | Information of the NCP |
|---|---|---|
| Local port information b1 | Global port information b1' | IP address of NCP1 |
| Local port information b2 | Global port information b2' | IP address of NCP2 |
| Local port information b3 | Global port information b3' | IP address of NCP2 |
| ... | ... | ... |

In step 405, for each NCP (whose identity information indicates that the member device is an NCP, such as the first NCP and the second NCP), the NCP periodically transmits the first heartbeat message to the NCC through the first internal channel. The first heartbeat message includes the resource information of the NCP, where the resource information represents the remaining available resources of the NCP.

For example, the NCP can periodically count resource information of the NCP. The resource information may include but not limited to one or more of memory resource information, CPU resource information, bandwidth resource information, and storage resource information. Where the memory resource information represents the remaining available memory resources of the NCP, the CPU resource information represents the remaining available CPU resources of the NCP, the bandwidth resource information represents the remaining available bandwidth resources of the NCP, and the storage resource information represents the remaining available storage resources of the NCP.

After each statistic of resource information, the NCP can transmit the first heartbeat message to the NCC through the first internal channel, and the first heartbeat message can include the resource information of the current statistical cycle.

In step 406, for an NCC (whose identity information indicates that the member device is an NCC), the NCC receives the first heartbeat message and obtains the resource information of the NCP from the first heartbeat message.

In an example, if the resource information of NCP indicates that the remaining available resources of NCP are less than a first threshold (which can be configured based on experience), the NCC displays the first alarm information, where the first alarm information is used to prompt the scale-out for the NCP in the cloud cluster switch, that is, increasing the number of NCPs in the cloud cluster switch. For example, a new NCP can be deployed within the cloud cluster switch to share the processing pressure of existing NCPs.

For example, if the resource information includes memory resource information and the memory resource information indicates that the remaining available memory resources are less than the first threshold, the NCC displays the first alarm information. For example, if the resource information includes CPU resource information and the CPU resource information indicates that the remaining available CPU resources are less than the first threshold, the NCC displays the first alarm information. For example, if the resource information includes bandwidth resource information and the bandwidth resource information indicates that the remaining available bandwidth resources are less than the first threshold, the NCC displays the first alarm information.

In an example, if the resource information of the NCP indicates that the remaining available resources of NCP are greater than a second threshold (which can be configured based on experience, and the second threshold can be greater than the first threshold), the NCC displays a second alarm information, where the second alarm information is used to prompt the scale-in for the NCP in the cloud cluster switch, that is, reducing the number of NCPs in the cloud cluster switch. For example, one or more NCPs in existing NCPs can be taken offline from the cloud cluster switch.

For example, if the resource information includes memory resource information and the memory resource information indicates that the remaining available memory resources are greater than the second threshold, the NCC displays the second alarm information. For example, if the resource information includes CPU resource information and the CPU resource information indicates that the remaining available CPU resources are greater than the second threshold, the NCC displays the second alarm information. For example, if the resource information includes bandwidth resource information and the bandwidth resource information indicates that the remaining available bandwidth resources are greater than the second threshold, the NCC displays the second alarm information.

In an example, if the resource information of the NCP indicates that the remaining available resources of NCP are not less than the first threshold and not greater than the second threshold, the NCC does not display an alarm information, that is, there is no need to scale out or scale in for the NCP of the cloud cluster switch.

Alternatively, the NCC can also display alarm information (prompt information) to indicate that the NCP of the cloud cluster switch should not be scaled out or scaled in.

In step 407, for each NCF (whose identity information indicates that the member device is an NCF), the NCF periodically transmits a second heartbeat message to the NCC through a second internal channel. The second heartbeat message may include resource information of the NCF, where the resource information may represent the remaining available resources of the NCF.

For example, the NCF can periodically count resource information of the NCF. The resource information may include but not limited to one or more of memory resource information, CPU resource information, bandwidth resource information, and storage resource information. After each statistic of the resource information, the NCF can transmit a second heartbeat message to the NCC through the second internal channel, and the second heartbeat message can include the resource information for the current statistical cycle.

In step 408, for an NCC (whose identity information indicates that the member device is an NCC), the NCC receives the second heartbeat message and obtains the resource information of the NCF from the second heartbeat message.

In an example, if the resource information of the NCF indicates that the remaining available resources of the NCF are less than a third threshold (which can be configured based on experience), the NCC displays a third alarm information, where the third alarm information is used to prompt the scale-out for the NCF in the cloud cluster switch, that is, increasing the number of NCFs in the cloud cluster switch. For example, a new NCF can be deployed within the cloud cluster switch to share the processing pressure of existing NCFs.

In an example, if the resource information of the NCF indicates that the remaining available resources of the NCF are greater than a fourth threshold (which can be configured based on experience, and the fourth threshold can be greater than the third threshold), the NCC displays a fourth alarm information, where the fourth alarm information is used to prompt the scale-in for the NCF in the cloud cluster switch, that is, reducing the number of NCFs in the cloud cluster switch. For example, one or more NCFs of existing NCFs can be taken offline from the cloud cluster switch.

In an example, if the resource information of the NCF indicates that the remaining available resources of the NCF are not less than the third threshold and not greater than the fourth threshold, the NCC does not display an alarm information, that is, there is no need to scale out or scale in for the NCF of the cloud cluster switch.

Alternatively, the NCC can also display alarm information (prompt information) to indicate that the NCF of the cloud cluster switch should not be scaled out or scaled in.

Fifth, the packet processing process of each member device in the cloud cluster switch.

The embodiments of the present application provide a packet processing method that can be applied to a member device in a cloud cluster switch, where the member device can be an NCC, an NCF, or an NCP.

After each member device in the cloud cluster switch is started, a member device determines the identity information of the member device in the cloud cluster switch. The identity information indicates that the member device is an NCP, or, the identity information indicates that the member device is an NCF, or, the identity information indicates that the member device is an NCC.

In an example, NCPs can be distinguished into a first NCP and a second NCP. The first NCP is the NCP that receives protocol packets (such as ARP (Address Resolution Protocol) protocol packets) transmitted by the server, that is, the NCP that receives the protocol packet is called the first NCP, and the other NCPs except the first NCP are called the second NCPs.

In an example, for a member device in the cloud cluster switch, the identity information of the member device in the cloud cluster switch can be determined. If the identity information indicates that the member device is a first NCP and a first protocol packet transmitted by a server is received through a first port, local port information of the first port is added to the first protocol packet to obtain a second protocol packet, and the second protocol packet is transmitted to an NCC.

If the identity information indicates that the member device is an NCC and the second protocol packet is received, the global port information of the first port is determined based on the local port information of the first port. A first forwarding entry is established, where the first forwarding entry includes the address information of the server in the first protocol packet and the global port information of the first port.

If the identity information indicates that the member device is an NCC, the first forwarding entry is transmitted to the first NCP, such that upon receiving a data packet with a destination address being the address information of the server, the first NCP queries the first forwarding entry based on the destination address to obtain the global port information of the first port, and transmits the data packet through the first port.

From the above technical solutions, it can be seen that in the embodiments of the present disclosure, a cloud cluster switch is deployed in a DC network, where the cloud cluster switch includes NCCs, NCFs, and NCPs. The NCCs, NCFs, and NCPs are independent devices (such as box switches) and the NCCs, NCFs, and NCPs in a cluster switch can be scaled out or scaled in.

When the traffic increases significantly, by scaling out, the cloud cluster switch can meet the forwarding needs of a large amount of traffic, to reduce forwarding latency, minimize traffic packet loss, and improve the service quality of the DC network.

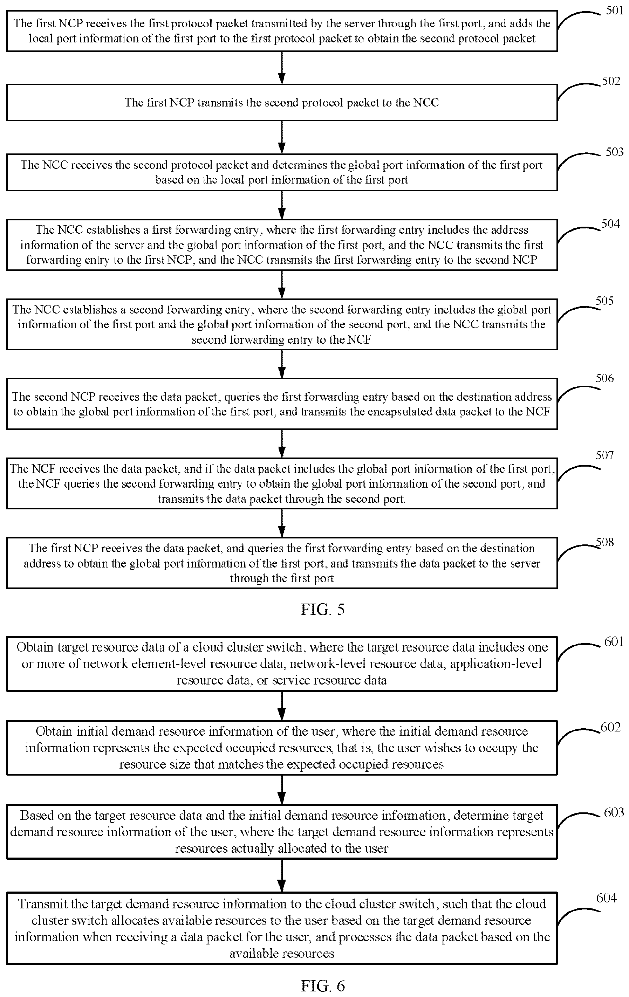

As shown in FIG. 5, FIG. 5 is a flowchart of a packet processing method. The method may include steps 501 to 508.

In step 501, for a first NCP (whose identity information indicates that the member device is an NCP, and the NCP receives the first protocol packet transmitted by the server is the first NCP), the first NCP receives the first protocol packet transmitted by the server through the first port, and adds the local port information of the first port to the first protocol packet to obtain the second protocol packet, that is, the second protocol packet can include the local port information of the first port.

In an example, the first protocol packet is a protocol packet used to trigger the establishment of an entry. The first protocol packet may include address information of a server, such as IP address of a server. For example, the first protocol packet can be an ARP protocol packet or other types of protocol packets, which can trigger the establishment of an entry.

When the first NCP receives the first protocol packet transmitted by the server through the first port 1, the first NCP can add the local port information a1 of the first port 1 to the first protocol packet to obtain the second protocol packet.

In step 502, the first NCP transmits the second protocol packet to the NCC.

In step 503, for an NCC (whose identity information indicates that the member device is an NCC), the NCC receives the second protocol packet and determines the global port information of the first port based on the local port information of the first port.

In an example, the NCC can obtain the local port information a1 of the first port 1 from the second protocol packet, and query the port mapping table as shown in Table 1 through the local port information a1 to obtain the global port information a1' corresponding to the local port information a1. The global port information a1' is the global port information of the first port 1.

In an example, upon receiving the second protocol packet, the NCC can also obtain the address information of the server, such as the IP address of the server, from the second protocol packet.

In step 504, the NCC establishes a first forwarding entry, where the first forwarding entry includes the address information of the server and the global port information of the first port. The NCC transmits the first forwarding entry to the first NCP, and the NCC transmits the first forwarding entry to the second NCP, that is, the NCC transmits the first forwarding entry to each NCP.

In an example, the first forwarding entry is used to guide the forwarding of the data packet. A matching item of the first forwarding entry is the address information of the server, and an action item of the first forwarding entry is the global port information of the first port. Of course, the first forwarding entry can also include other content, and there are no restrictions on the first forwarding entry.

The NCC can transmit the first forwarding entry to the first NCP, and the first NCP stores the first forwarding entry. During the forwarding process of the data packet, the first NCP can forward the data packet based on the first forwarding entry.

The NCC can transmit the first forwarding entry to the second NCP, and the second NCP stores the first forwarding entry. During the forwarding process of the data packet, the second NCP can forward the data packet based on the first forwarding entry.

In step 505, the NCC establishes a second forwarding entry, where the second forwarding entry includes the global port information of the first port and the global port information of the second port. The NCC transmits the second forwarding entry to the NCF.

The NCC determines the global port information of the second port of the NCF, and the NCF connects to the first NCP through this second port, i.e., determines the global port information of the second port connected to the first NCP on the NCF.

For example, when the NCC receives the second protocol packet transmitted by the first NCP, the NCC can also obtain the information about the first NCP, such as the IP address of NCP1, indicating that NCP1 transmits the second protocol packet to the NCC.

After obtaining the information of the first NCP, the NCC queries the port mapping table through the information of the first NCP, to obtain the local and global port information of the second port. For example, when querying the port mapping table as shown in Table 2 through the IP address of NCP1, the global port information b1' of the second port can be obtained.

After obtaining the global port information of the first port and the global port information of the second port, the NCC can establish a second forwarding entry. The second forwarding entry is used to guide the forwarding of the data packet. The matching item of the second forwarding entry is the global port information of the first port, and the action item of the second forwarding entry is the global port information of the second port. Of course, the second forwarding entry can also include other content, which is not limited.

The NCC can transmit a second forwarding entry to each NCF, and the NCF stores the second forwarding entry. During the forwarding process of the data packet, the NCF can forward the data packet based on the second forwarding entry.

In summary, each NCP stores the first forwarding entry, and each NCF stores the second forwarding entry. The following describes the data packet forwarding process based on the first forwarding entry and the second forwarding entry.

In step 506, for a second NCP (whose identity information indicates that the member device is an NCP, and if an egress port for the data packet is not on the NCP after the NCP receives the data packet, the NCP is the second NCP), the second NCP receives the data packet, and the destination address of the data packet is the address information of the server. The second NCP queries the first forwarding entry based on the destination address to obtain the global port information of the first port. If it is determined based on the global port information that the egress port for the data packet is not in the NCP, the global port information of the first port is encapsulated into the data packet, and the encapsulated data packet is transmitted to the NCF.

The first forwarding entry includes the address information of the server and the global port information of the first port, the destination address of the data packet is the address information of the server. Therefore, when the second NCP queries the first forwarding entry based on the destination address of the data packet, the global port information corresponding to the destination address can be obtained.

When the NCC generates global port information, an algorithm can be used to operate on local port information to obtain global port information, such as combining a random number with local port information to obtain global port information. After obtaining the global port information corresponding to the destination address, the second NCP can also perform a reverse operation on the global port information to obtain local port information, such as removing the random number from the global port information to obtain local port information.

After obtaining the local port information, the second NCP can determine whether the first port (i.e., the egress port corresponding to the data packet) corresponding to the local port information is located in this second NCP. If not, the second NCP encapsulates the global port information of the first port into the data packet and transmits the encapsulated data packet to the NCF.

In step 507, for an NCF (whose identity information indicates that the member device is an NCF), the NCF receives the data packet. If the data packet includes the global port information of the first port, the NCF queries the second forwarding entry to obtain the global port information of the second port, and transmits the data packet through the second port.

The second NCP encapsulates the global port information of the first port into the data packet, and transmits the encapsulated data packet to the NCF. Therefore, upon receiving the data packet, the NCF can obtain the global port information of the first port from the data packet and query the second forwarding entry through the global port information of the first port.

Since the second forwarding entry includes the global port information of the first port and the global port information of the second port, the NCF can obtain the global port information of the second port when querying the second forwarding entry.

When the NCC generates global port information, an algorithm can be used to operate on local port information to obtain global port information, such as combining a random number with local port information to obtain global port information. After obtaining the global port information of the second port, the NCF can further perform a reverse operation on the global port information to obtain the local port information of the second port, such as removing the random number from the global port information to obtain the local port information.

After obtaining the local port information of the second port, the NCF can determine the second port corresponding to the local port information, that is, which second port of the NCF the local port information corresponds to. On this basis, the NCF can transmit the data packet through the second port, that is, transmit the data packet to the first NCP.

Before transmitting data packets through the second port, the NCF can also remove the global port information of the first port, that is, the global port information of the first port encapsulated in the data packet by the second NCP.

In step 508, for a first NCP (whose identity information indicates that the member device is an NCP, and if an egress port for the data packet is on the NCP after the NCP receives the data packet, the NCP is the first NCP), the first NCP receives the data packet, and the destination address of the data packet is the address information of the server. The first NCP queries the first forwarding entry based on the destination address to obtain the global port information of the first port. If it is determined based on the global port information that the egress port corresponding to the data packet is located in this NCP, the data packet is transmitted through the first port, that is, the first NCP transmits the data packet to the server through the first port.

The first forwarding entry includes the address information of the server and the global port information of the first port, the destination address of the data packet is the address information of the server. Therefore, when the first NCP queries the first forwarding entry based on the destination address of the data packet, the global port information corresponding to the destination address can be obtained.

When the NCC generates global port information, an algorithm can be used to operate on local port information to obtain global port information, such as combining a random number with local port information to obtain global port information. After obtaining the global port information corresponding to the destination address, the first NCP can also perform a reverse operation on the global port information to obtain local port information, such as removing the random number from the global port information to obtain local port information.

After obtaining the local port information, the first NCP can determine whether the first port (i.e., the egress port corresponding to the data packet) corresponding to the local port information is located in this first NCP. If so, the first NCP transmits the data packet to the server through the first port.

For the data packet received by the first NCP, the data packet can come from the second NCP, that is, the second NCP transmits the data packet to the NCF, and the NCF transmits the data packet to the first NCP. The data packet can also come from another server connected to the first NCP, where the server directly transmits the data packet to the first NCP. In this case, the first NCP forwards the data packet directly through the first forwarding entry.

At this point, the forwarding process of the data packet is completed, and the data packet is successfully transmitted to the server.

In an example, the NCP includes an application container and a routing container, the NCC includes an application container and a routing container, and the NCF includes an application container and a routing container. The following describes steps 501-505.

For steps 501 and 502, for the first NCP, the application container of the first NCP is used to receive the first protocol packet and transmit the first protocol packet to the routing container of the first NCP.

The routing container of the first NCP is used to add local port information of the first port to the first protocol packet to obtain the second protocol packet, and transmit the second protocol packet to the routing container of the NCC.

For steps 503 and 504, for the NCC, the routing container of the NCC is used to receive the second protocol packet and transmit the second protocol packet to the application container of the NCC.

The application container of the NCC is used to determine the global port information of the first port based on the local port information of the first port, establish a first forwarding entry, and transmit the first forwarding entry to the application container of the first NCP.

The application container of the NCC is used to transmit the first forwarding entry to the application container of the second NCP.

The application container of the NCC is used to determine the global port information of the second port of the NCF, establish a second forwarding entry, and transmit the second forwarding entry to the application container of the NCF.

From the above technical solutions, it can be seen that in the embodiments of the present disclosure, a cloud cluster switch is deployed in a DC network, where the cloud cluster switch includes NCCs, NCFs, and NCPs. The NCCs, NCFs, and NCPs are independent devices (such as box switches) and the NCCs, NCFs, and NCPs in a cluster switch can be scaled out or scaled in.

When the traffic increases significantly, by scaling out, the cloud cluster switch can meet the forwarding needs of a large amount of traffic, to reduce forwarding latency, minimize traffic packet loss, and improve the service quality of the DC network.

Sixth, the joining or leaving of a member device in the cloud cluster switch.

When the first member device (a member device to be added to the cloud cluster switch is referred to as the first member device) joins the cloud cluster switch, the NCC establishes a third internal channel with the first member device to receive a third registration message transmitted by the first member device through the third internal channel.

For example, the first member device establishes a third internal channel with the NCC, and transmits a third registration message to the NCC through the third internal channel. In this way, the NCC can establish a third internal channel with the first member device and receive the third registration message transmitted by the first member device through the third internal channel.

Based on the third registration message, the first member device (such as an NCP or an NCF) is registered on the NCC. The registration process of the first member device can be seen in FIG. 4, steps 401-404.

In addition to the registration process, upon receiving the third registration message, the NCC can also perform the following operations:
if the first member device is the second NCP (the identity information of the first member device represents an NCP, and NCPs newly added to the cloud cluster switch are all second NCPs) and the third registration message is received, all first forwarding entries are transmitted to the second NCPs. This can guide the second NCP to forward data packets based on the first forwarding entries. The forwarding process of data packets is described in the above embodiment.

If the first member device is an NCF (the identity information of the first member device represents NCF) and a third registration message is received, all second forwarding entries are transmitted to the NCF, which can guide the NCF to forward data packets based on the second forwarding entries. The forwarding process is described in the above embodiment.

In an example, for a member device newly added to the cloud cluster switch (physical cluster), identity information can also be determined through a configuration file. Taking the startup process of Device B (i.e., the first member device) joining the physical cluster Device A (i.e., an NCC) as an example, the joining process of the member device is introduced.

Device B starts the cloud platform Admin component and cloud platform Worker component according to the configuration file. The cloud platform Worker component automatically starts the application container, automatically register with the Leader, and start the cluster joining timer. Device A is the Leader in the physical cluster, and replies the cloud platform Worker component with being successfully added. The Leader issues the instruction of creating a container, and schedules Device B based on the resource situation reported by each member device to create and start the container on Device B. After the container of Device B is successfully started, the cloud platform Worker component reports the information of the container to the Leader. Leader synchronizes the forwarding entry information of other containers in the current cloud cluster with the cloud platform Worker component of Device B.

When the second member device (a member device that is about to leave the cloud cluster switch is referred to as the second member device) leaves the cloud cluster switch, for an NCC, the NCC performs the following processing based on the identity of the second member device.

If the second member device is the second NCP, when the second member device is to leave the cloud cluster switch, the second member device can simply leave without triggering the update processes of the first forwarding entry and the second forwarding entry.

If the second member device is the NCF, when the second member device is to leave the cloud cluster switch, the second member device can simply leave without triggering the update processes of the first forwarding entry and the second forwarding entry.

If the second member device is the first NCP, the NCC can also obtain the third and fourth forwarding entries corresponding to the second member device. The third forwarding entry is a first forwarding entry triggered by the first NCP, and the fourth forwarding entry is a second forwarding entry triggered by the first NCP.

The third forwarding entry includes the address information of the server and the global port information of the port on the second member device, and the fourth forwarding entry includes the global port information of the port on the second member device and the global port information of the port on the NCF.

Based on this, the NCC can transmit a first delete instruction to all second NCPs, where the first delete instruction is configured to cause each second NCP to delete the third forwarding entry corresponding to the second member device. In this way, the second NCP can delete the third forwarding entry, and will not transmit data packets to the second member device based on the third forwarding entry, thereby avoiding abnormal data packet transmission caused by the leaving of the second member device.

In addition, the NCC can transmit a second delete instruction to all NCFs, where the second delete instruction is configured to cause each NCF to delete the fourth forwarding entry corresponding to the second member device. In this way, the NCF can delete the fourth forwarding entry and will not transmit data packets to the second member device based on the second forwarding entry.

In an example, when the second member device leaves the cloud cluster switch, there may be two situations.

The second member device voluntarily leaves the cloud cluster switch. For example, if the administrator removes the second member device from the cloud cluster switch (physical cluster), the second member device can transmit a leave cluster packet to the NCC (i.e., Leader) before leaving the cloud cluster switch, and the NCC will reply with a leave cluster response packet.

After receiving the leave cluster packet, the NCC determines that the second member device has left the cluster switch. If the second member device is the second NCP or the NCF, the NCC will remove the second member device from the physical cluster device list and the physical cluster topology, and synchronize the updated physical cluster information and the cluster topology to each member device. If the second member device is the first NCP, the NCC will remove the second member device from the physical cluster device list and the physical cluster topology, and synchronize the updated physical cluster information and the cluster topology to each member device. And the NCC notifies all second NCPs to delete the third forwarding entry corresponding to the second member device, and the NCC notifies all NCFs to delete the fourth forwarding entry corresponding to the second member device.

When the administrator removes the second member device from the cloud cluster switch, the undo join-cluster command is executed in the cloud cluster member view to remove the second member device from the cloud cluster switch.

The second member device passively leaves the cloud cluster switch. When the route between the second member device and the NCC (Leader) is not reachable, the NCC cannot receive the heartbeat message transmitted by the second member device, and the NCC determines that the second member device has left the cloud cluster switch. The NCC will remove the second member device from the physical cluster device list and the physical cluster topology, and synchronize the updated physical cluster information and the cluster topology to each member device. If the second member device is the first NCP, the NCC notifies all second NCPs to delete the third forwarding entry corresponding to the second member device, and the NCC notifies all NCFs to delete the fourth forwarding entry corresponding to the second member device.

From the above technical solutions, it can be seen that in the embodiments of the present disclosure, a cloud cluster switch is deployed in a DC network, where the cloud cluster switch includes NCCs, NCFs, and NCPs. The NCCs, NCFs, and NCPs are independent devices, and the NCCs, NCFs, and NCPs in a cluster switch can be scaled out or scaled in. It can improve network bandwidth utilization rate and reduce fault recovery time, provide optimal choices for computing power connections of different scales, design AI computing power scenarios, have strong ecological decoupling capabilities and excellent computing power network performance, provide the best solution for heterogeneous GPU network interconnection, and enable the network to match the service flow model of AI intelligent computing centers.

Seventh, resource management for the cloud cluster switch.

The present embodiment proposes a resource management method that can be applied to manage devices. As shown in FIG. 6, FIG. 6 is a flowchart of the resource management method, the method may include steps 601 to 604.

In step 601, target resource data of a cloud cluster switch is obtained, where the target resource data includes one or more of network element-level resource data, network-level resource data, application-level resource data, or service resource data.

In step 602, initial demand resource information of the user is obtained, where the initial demand resource information represents the expected occupied resources, that is, the user wishes to occupy the resource size that matches the expected occupied resources.

In step 603, based on the target resource data and the initial demand resource information, target demand resource information of the user is determined, where the target demand resource information represents resources actually allocated to the user.

In step 604, the target demand resource information is transmitted to the cloud cluster switch, such that the cloud cluster switch allocates available resources to the user based on the target demand resource information when receiving a data packet for the user, and processes the data packet based on the available resources.

In an example, the network-level resource data includes resource data of the cloud cluster switch, and the resource data of the cloud cluster switch includes overall network utilization rate, network capacity, and network health of the cloud cluster switch. The network element-level resource data includes resource data of each member device in the cloud cluster switch, where a member device in the cloud cluster switch is an NCC, an NCF, or an NCP, where the resource data of the member device includes a physical resource utilization rate, a logical resource utilization rate, and a health-level of the member device.

In an example, the application-level resource data can include but is not limited to: network quality when the cloud cluster switch forwards a data packet, where the network quality includes one or more of a packet loss rate, latency, or jitter.

In an example, obtaining the application-level resource data corresponding to the cloud cluster switch includes:
receiving an RPC (Remote Procedure Call) protocol packet transmitted by the RPC module of the member device in the cloud cluster switch, where the RPC protocol packet may include a monitoring indicator counted by the member device; where the member device can be an NCC, an NCF, or an NCP; where the member device includes an SQA (Service Quality Analysis) module, an eMDI (Enhanced Media Delivery Index) module, and an RPC module; where the SQA module transmits a specified type of a target traffic characteristic to the eMDI module, where the specified type includes an audio type and/or a video type; where when the eMDI module receives a data packet that matches the target traffic characteristic, the eMDI module counts a monitoring indicator of the data packet and transmits the monitoring indicator to the SQA module, the SQA module transmits the monitoring indicator to the RPC module, and the RPC module generates the RPC protocol packet containing the monitoring indicator;
obtaining the monitoring indicator counted by the member device from the RPC protocol packets; and
determining, based on the monitoring indicator counted by each member device, the application-level resource data.

In an example, the service resource data may include, but is not limited to: resource data of a server accessing (coupled with) the cloud cluster switch; in a case that the server is a GPU, the service resource data includes computing performance of the GPU and/or memory bandwidth of the GPU. The computing performance represents a theoretical computing capability of the GPU when processing data of different accuracies. The memory bandwidth represents a data transmitting speed provided by the GPU when processing large-scale data.

In an example, determining the target demand resource information of the user includes: in response to determining that the initial demand resource information includes expected occupied resources for the cloud cluster switch, and the target resource data indicates that available resources of the cloud cluster switch are greater than a first resource threshold, determining that the target demand resource information is greater than the initial demand resource information, such that available resources allocated to the user are greater than the expected occupied resources; or, in response to determining that the target resource data indicates that available resources of the cloud cluster switch are less than a second resource threshold, determining that the target demand resource information is less than the initial demand resource information, such that available resources allocated to the user are less than the expected occupied resources.

In an example, determining the target demand resource information of the user includes: in response to determining that the initial demand resource information includes expected occupied resources for a server coupled with the cloud cluster switch, and the target resource data indicates that the available resources of the server are greater than a third resource threshold, determining that the target demand resource information is greater than the initial demand resource information, such that available resources allocated to the user are greater than the expected occupied resources; or in response to determining that the target resource data indicates that available resources of the server are less than a fourth resource threshold, determining that the target demand resource information is less than the initial demand resource information, such that available resources allocated to the user are less than the expected occupied resources.

Eighth, AI network health monitoring, analysis, adjustment, and optimization.

The AI intelligent computing center based on the cloud cluster switch can use one or more cloud cluster switches to complete complex network construction according to the size of the scale, and can manage resources of cloud cluster switches through a management device. For example, the cloud platform Manager component of a cloud cluster switch provides a management interface to the outside world, and the management device call this management interface to manage the resources of the cloud cluster switch.

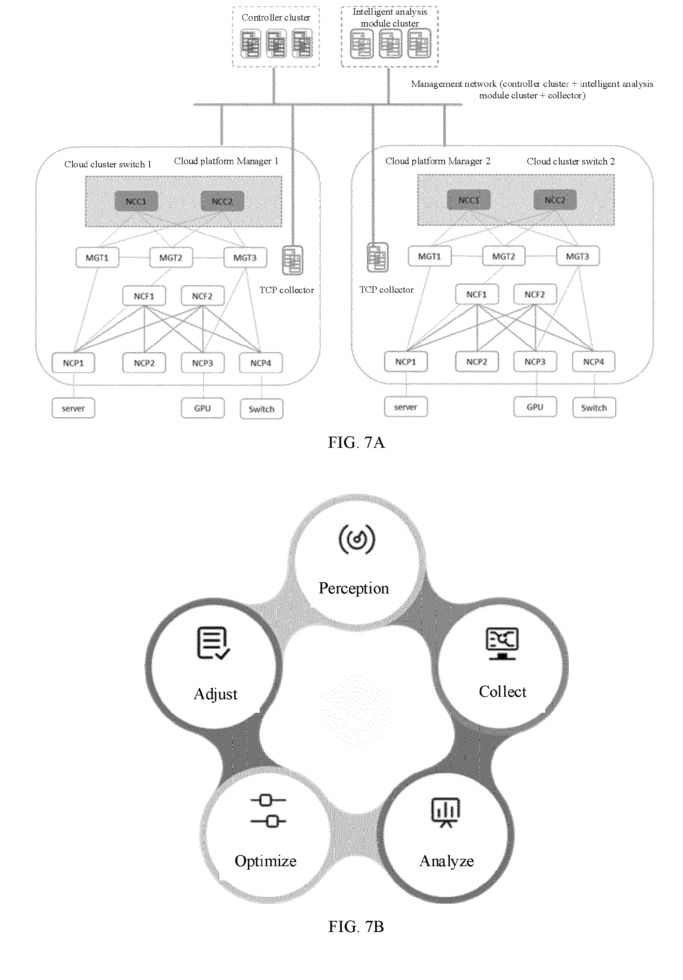

As shown in FIG. 7A, FIG. 7A is a schematic diagram of the networking structure of the cloud cluster switches. Taking cloud cluster switch 1 and cloud cluster switch 2 as an example, the cloud cluster switch 1 includes a cloud platform Manager 1 component, and the cloud cluster switch 2 includes a cloud platform Manager 2 component. The management device includes a controller cluster, an intelligent analysis module cluster, and a Transmission Control Protocol (TCP) collector.

In the process of resource management, the TCP collector is used to obtain data information during the operation of the cloud cluster switch. The intelligent analysis module cluster is used to analyze target resource data based on this data information, where the target resource data includes network element-level resource data, network-level resource data, application-level resource data, or service resource data. Based on the target resource data and initial demand resource information, the target demand resource information is determined. The controller cluster is used to transmit target demand resource information to the cloud cluster switch, so that the cloud cluster switch can allocate available resources to the user based on the target demand resource information when receiving the data packet for the user.

In an example, the entire network is designed to adapt to the service traffic model of the AI intelligent computing center. As shown in FIG. 7B, FIG. 7B is a schematic diagram of health monitoring, analysis, adjustment and optimization for an AI network. This process can include perception, collection, analysis, optimization, and adjustment, which can enable the network to better match the service of the intelligent computing center.

### 1. Perception module and function thereof.

The cloud platform Manager component is coupled with various controller clusters in the AI intelligent computing center through a northbound network API (Application Programming Interface). The controller cluster can include a configuration management controller, a computing platform controller, a storage platform controller, and a service operation and maintenance controller.

The cloud platform Manager component is coupled with the configuration management controller, where the configuration management controller stores the role definition of each member device of the cloud cluster switch and the corresponding startup configuration template. The cloud platform Manager component obtains startup configuration template for each member device through TFTP (Trivial File Transfer Protocol), obtains the IP address through DHCP, and completes the startup construction of the cloud cluster switch.

The cloud platform Manager component is coupled with the service operation and maintenance controller and the computing platform controller, obtains a tenant the importance of the service of the tenant, the computing resources (virtual machines and GPUs) for the tenant, and obtains the access port and network service quality policy template corresponding to the tenant, and issues them to the corresponding port to complete the deployment of the service.

### 2. Collection module and function, analysis module and function.

The collection module is used to collect data information during the operation of the cloud cluster switch. The analysis module is used to analyze data information and obtain target resource data for the cloud cluster switch, where the target resource data may include network element-level resource data, network-level resource data, and application-level resource data. For example, the collection module can be deployed on the TCP collector, and the analysis module can be deployed on the intelligent analysis module cluster.

For the network element-level resource data, the network element-level resource data refers to the resource data of each member device within the cloud cluster switch. The resource data of a member device can include physical resource utilization rate, logical resource utilization rate, and health status of the member device. The member device can be an NCC, an NCF, or an NCP.

For example, the network element-level resource data can include but is not limited to the physical resource utilization rate, logical resource utilization rate, and health status of each NCC, the physical resource utilization rate, logical resource utilization rate, and health status of each NCF, and the physical resource utilization rate, logical resource utilization rate, and health status of each NCP.

The physical resource utilization rate can be the utilization rate of physical resources such as CPU, memory, bandwidth, etc. The logical resource utilization rate can be the utilization rate of logical resources such as entries (such as ARP entries, forwarding entries, etc.). Health status indicates the health level of a member device. For example, when CPU usage, bandwidth usage, etc. are high, the health status is low, while when CPU usage, bandwidth usage, etc. are low, the health status is high.

For example, for each member device of the cloud cluster switch, the member device can support at least one of the following detection technologies: one click self check, one click diagnosis, KPI (Key Performance Indicator), GOLD (Generic OnLine Diagnostics), or EAA (Embedded Automation Architecture).

Based on this, using these detection techniques, the collection module can collect data information during the operation of the member device, and the analysis module can analyze the data information to obtain the resource data of the member device.

Based on the resource data of each member device, the network element-level resource data of the cloud cluster switch can be obtained, and this network element-level resource data includes the resource data of each member device within the cloud cluster switch.

For the network-level resource data, the network-level resource data refers to the resource data of the cloud cluster switch, where the resource data of the cloud cluster switch includes the overall network utilization rate, network capacity, and network health of the cloud cluster switch. Obviously, the network-level resource data is the resource data for the overall network of the cloud cluster switch.

The overall utilization rate of the network refers to the degree to which network resources are effectively utilized and is an important indicator for measuring network performance. The overall network utilization rate is divided into channel utilization rate and network utilization rate. Channel utilization rate refers to the ratio of the time during which there is data passing through to the time during which there is or is not data passing through. Network utilization rate is the weighted average of channel utilization rate, reflecting the overall utilization rate of the network. The calculation of overall network utilization rate involves multiple factors, such as the communication capability of the channel, data transmission speed, and the amount of simultaneous communication in the network.

Network capacity is an important indicator for describing network performance, which is the theoretical amount of data that can be transmitted. Network capacity is related to various factors such as bandwidth, load, throughput, and maximum forwarding rate.

The network health represents the health level of the network of the cloud cluster switch.

For example, the cloud cluster switch can support at least one of the following detection technologies (i.e., network-level detection technologies): NQA (Network Quality Analyzer), TWAMP (Two Way Active Measurement Protocol), TWAMP Light, iNQA (Intelligent Network Quality Analyzer), iFIT (In Flow Information Telemetry), INT (In Band Network Telemetry), or MOD (Mirror On Drop), which is not limited.

The above detection technology is network intelligent operation and maintenance technology, used to test link status, evaluate network device performance and service quality, which achieves network performance detection, and effectively diagnoses and locates faults in the event of network failures. Based on these detection techniques, the collection module can collect data information (such as packet loss rate, latency, latency jitter, and other network quality data) during the operation of the cloud cluster switch, and the analysis module can analyze the data information to obtain the resource data (i.e., network-level resource data) of the cloud cluster switch.

For application-level resource data, the application-level resource data can be used to evaluate the network quality when the data packet is forwarded by the cloud cluster switch, where the network quality includes but not limited to packet loss rate, latency, and jitter.

For example, some or all member devices are selected from all member devices of the cloud cluster switch as candidate member devices. The collection module collects data information during the operation of candidate member devices, such as packet loss rate, latency, jitter, etc. The analysis module can analyze the data information to obtain the network qualities of candidate member devices, and determine application-level resource data based on the network qualities of all candidate member devices.

For example, the average packet loss rate of all candidate member devices, the average latency of all candidate member devices, and the average jitter of all candidate member devices are determined as the application-level resource data.

For example, the cloud cluster switch can support at least one of the following detection techniques: NQA, TWAMP, TWAMP Light, iNQA, iFIT, INT, or MOD. Based on these detection techniques, the collection module can collect data information (such as packet loss rate, latency, jitter, etc.) during the operation of candidate member devices.

The analysis module can analyze the data information to obtain the network qualities of candidate member devices, and determine application-level resource data based on the network qualities of all candidate member devices.

In an example, the member devices that have enabled the Enhanced Media Delivery Index (eMDI) function can be considered as candidate member devices, and member devices that have not enabled the eMDI function are not considered as candidate member devices. The candidate member devices may include SQA (Service Quality Analysis) modules, eMDI modules, and RPC (Remote Procedure Call) modules. Based on this, the following steps S11 to S15 can be taken to obtain application-level resource data

In step S11, the SQA module of the candidate member device transmits a specified type of target traffic characteristic to the eMDI module of the candidate member device, where the specified type including audio type and/or video type.

In an example, the cloud platform Manager component can enable eMDI function in the application container of a member device, and the member device that enables eMDI function is selected as a candidate member device. On the candidate member device, the SQA module identifies the target traffic feature of the audio type and/or the video type, and transmits the target traffic feature of the audio type and/or the video type to the eMDI module.

In step S12, the eMDI module monitors the data packet. If a data packet that matches the target traffic characteristic is received, the eMDI module counts the monitoring indicator of the data packet and transmits the monitoring indicator to the SQA module.

In an example, for the audio and video services of AI intelligent computing centers, eMDI is a fault definition and health diagnosis technology designed for audio and video services such as VoIP and IPTV. By enabling the eMDI function on candidate member devices, the eMDI module can monitor real-time data packets of audio and video services.

Each time a candidate member device receives a data packet, the eMDI module can determine whether the traffic characteristic of the data packet match the target traffic characteristic. If so, it means that the data packet is for audio and video services, and the eMDI module needs to count the monitoring indicator of the data packet. If not, it means that the data packet is not for audio and video services, and the monitoring indicator of the data packet will not be counted.

When the eMDI module counts the monitoring indicator of a data packet, the monitoring indicator can be the data information during the operation of a candidate member device, such as packet loss rate information, delay information, jitter information, etc. After obtaining the monitoring indicator, the eMDI module can also transmit the monitoring indicator to the SQA module.

In step S13, the SQA module transmits the monitoring indicators of candidate member devices to the RPC module.

In step S14, the RPC module encapsulates the monitoring indicators of candidate member devices into RPC protocol packets and transmits the RPC protocol packets to the management device (such as the collection module of the management device).

In step S15, the management device receives the RPC protocol packets and obtains monitoring indicators for candidate member devices from the RPC protocol packets. The management device determines, based on the monitoring indicator counted by each candidate member device, the application-level resource data.

In an example, the collection module obtains the monitoring indicators of candidate member devices from the RPC protocol packets after receiving the RPC protocol packets, and transmits the monitoring indicators of candidate member devices to the analysis module. The analysis module analyzes the monitoring indicators of candidate member devices, obtains the network qualities (such as packet loss rate, latency, jitter, etc.) of candidate member devices, and determines application-level resource data based on the network qualities of all candidate member devices, e.g., taking the average packet loss rate of all candidate member devices, the average latency of all candidate member devices, and the average jitter of all candidate member devices as the application-level resource data.

In summary, by combining the eMDI module, the SQA module, the RPC module with management device, application-level resource data for audio and video tasks can be obtained, thereby obtaining real-time information on application service.

If the response of the application service slows down, it is necessary to determine in real-time whether it is due to network impact or computing resource impact based on application-level resource data, and then adopt corresponding optimization adjustments. Based on application-level resource data, it is possible to understand network conditions, define the location of network failures, optimize network deployment, and meet the needs of audio and video services.

In an example, in addition to network element-level resource data, network-level resource data, and application-level resource data, the target resource data may also include service resource data, where the service resource data is resource data of a server accessing the cloud cluster switch, and is used to indicate which resources the server has.

For example, if the server is a GPU, the service resource data can include but is not limited to the computing performance of the GPU and/or memory bandwidth of the GPU, of course, which is not limited.

The computing performance represents a theoretical computing capability of the GPU when processing data of different accuracies. For example, the theoretical floating-point performance of the GPU can be 9.7, 19.5, 156 TFLOPS (floating-point operations per second), etc. These indicators represent the theoretical computing power when processing data of different accuracies.

The memory bandwidth represents a data transmitting speed provided by the GPU when processing large-scale data. For example, a GPU equipped with 40GB of video memory has excellent memory bandwidth, for example, the memory bandwidth can reach 1.6 TB/s, which means that the GPU can provide efficient data transfer speed when processing large-scale data.

In an example, the analysis module can obtain the performance indicator of each GPU (server). If these performance indicators are significantly lower than their own capabilities, the reasons can be two: one is that the service is not busy, and the other is that the GPU cooperates with each other, and network communication congestion leads to a decrease in computing power.

### 3. Optimization module and function, adjustment module and function.

The optimization module can determine the target demand resource information based on the target resource data and initial demand resource information. The initial demand resource information represents the expected occupied resources, which can be provided by the user. The target demand resource information is represented as the resources actually allocated to the user.

In an example, if the initial demand resource information is the expected occupancy resources of the cloud cluster switch, such as expected occupancy of 500M of bandwidth resources of the user. Therefore, if the target resource data indicates that the available resources of the cloud cluster switch are greater than the first resource threshold, the target demand resource information can be greater than the initial demand resource information, such as actually allocating 600M of bandwidth resources to the user. The target demand resource information can also be equal to the initial demand resource information, such as allocating 500M of bandwidth resources to the user. Alternatively, if the target resource data indicates that the available resources of the cloud cluster switch are less than the second resource threshold, the target demand resource information may be less than the initial demand resource information, such as allocating 400M of bandwidth resources to the user.

For example, the target resource data includes the physical resource utilization rate, logical resource utilization rate, and health status of each member device, the overall network utilization rate, network capacity, and network health of the cloud cluster switch, and the network quality (packet loss rate, latency, and jitter) of the cloud cluster switch when forwarding data packets.

If the physical resource utilization rate, logical resource utilization rate, and health status of the member device indicate that the member device has more available resources (such as more bandwidth resources), then the target resource data represents that the available resources of the cloud cluster switch are greater than the first resource threshold. If the physical resource utilization rate, logical resource utilization rate, and health of the member devices indicate that the available resources of the member device are less (such as less bandwidth resources), then the target resource data represents that the available resources of the cloud cluster switch are less than the second resource threshold.

If the overall network utilization rate, network capacity, and network health of the cloud cluster switch indicate that the network situation of the cloud cluster switch is good (i.e., more bandwidth resources are available), the target resource data indicates that the available resources of the cloud cluster switch are greater than the first resource threshold. If the overall network utilization rate, network capacity, and network health of the cloud cluster switch indicate poor network conditions, the target resource data indicates that the available resources of the cloud cluster switch are less than the second resource threshold.

If the network quality (packet loss rate, latency, and jitter) is good, the target resource data indicates that the available resources of the cloud cluster switch are greater than the first resource threshold. If the network quality (packet loss rate, latency, and jitter) is poor, the target resource data indicates that the available resources of the cloud cluster switch are less than the second resource threshold.

In an example, if the initial demand resource information is the expected resource occupancy of the server accessing the cloud cluster switch, such as expected usage of 10G of computing resources of the user. Therefore, if the target resource data indicates that the available resources of the server are greater than the third resource threshold, the target demand resource information can be greater than the initial demand resource information, such as actually allocating 15G of computing resources to the user. The target demand resource information can also be equal to the initial demand resource information, such as allocating 10G of computing resources to the user. Alternatively, if the target resource data indicates that the available resources of the server are less than the fourth resource threshold, the target demand resource information may be less than the initial demand resource information, such as allocating 8G of computing resources to the user.

For example, the target resource data includes service resource data, and the service resource data can include the available resources of the server (such as the remaining computing resources). Based on this service resource data, it can be known that the available resources of the server are greater than the third resource threshold or less than the fourth resource threshold.

After getting the target demand resource information, the adjustment module transmits target demand resource information to the cloud cluster switch, such that the cloud cluster switch allocates available resources to the user based on the target demand resource information when receiving a data packet for the user, and processes the data packet based on the available resources.

For example, if the target demand resource information is 600M bandwidth resources, the cloud cluster switch allocates 600M bandwidth resources to the user. In this way, when the cloud cluster switch receives data packets, the data packets are processed based on the 600M bandwidth resources. For example, if the target demand resource information is 15G of computing resources, the cloud cluster switch notifies the server to allocate 15G of computing resources to the user. In this way, when the server receives the data packet, the data packet is processed based on the 15G of computing resources.

In an example, for a southbound management network (management network out of network band), configuration and data collection can be run using SNMP, SysLog, Netconf, gRpc Telemetry. For the traffic collection network of the collector, the TCP collector can use ERSPAN for collection, and the TCP collector can be deployed nearby with the intelligent analysis module. The TCP collector can be deployed within Fabric and the TCP collector can be deployed nearby with the intelligent analysis module.

In an example, for optimizing and adjustment modules and functions, the cloud platform Manager component can respond to the analysis result of the analysis module, adjust the forwarding strategy of each service in a timely manner, and distribute them to each member device, which ensures sufficient QoS network services for the service of the intelligent computing center. Optimization techniques include various strategic measures such as bandwidth guarantee, priority queue, CAR (Committed Information Rate), QoS, GTS, speed limit, etc. These are integrated and implemented on the application containers of member devices.

Optimization is the process of allocating and optimizing between various services while ensuring that the entire network bandwidth meets the bandwidth requirements of the intelligent computing center. If the local and core bandwidth cannot meet the service requirements of the intelligent computing center, adjustments need to be made to the cloud cluster switch: increasing link bandwidth and increasing device scale-out system processing capacity.

By utilizing the scale-out processing capability of the cloud cluster switch, new member devices can be added to the cloud cluster switch when the forwarding capability cannot meet the requirements. The cloud cluster switch adopts the principle of local forwarding priority, and for each member device, the packets received by the member device should be forwarded using the local egress interface as much as possible. If the member device is unable to forward the packet, other member devices will share the forwarding of the packet, greatly improving the overall forwarding speed and processing capability of the system. Each member device supports functions such as traffic caching and fast traffic switching, further improving the processing performance of the cloud cluster switch.

By utilizing the scale-out bandwidth energy of the cloud cluster switch, when the access devices (i.e., servers connected to the cloud cluster switch) of the cloud cluster switch increase, service traffic increases, and upstream bandwidth increases, new member devices can be added to the aggregation group by adding their ports to increase the bandwidth of the cloud cluster switch. By adding new member devices to the cloud cluster switches, the number of cloud cluster switches remains unchanged, and the new member devices and the existing member devices belong to one device, reducing operational problems caused by network configuration changes.

Based on the above technical solution, the physically decoupled cloud cluster switch is applied to the AI intelligent data center, placing network operation and maintenance on the cloud platform, greatly facilitating configuration management, operation and maintenance management, troubleshooting, and dynamically scaling out devices based on service communication volume. Based on service traffic and network health monitoring, dynamically and imperceptibly optimize and adjust device and network bandwidth as well as forwarding strategy. Whether the GPU is operating at its maximum efficiency can be analyzed, whether it is caused by network congestion can be analyzed, and promptly optimize and adjust forwarding strategies due to network.

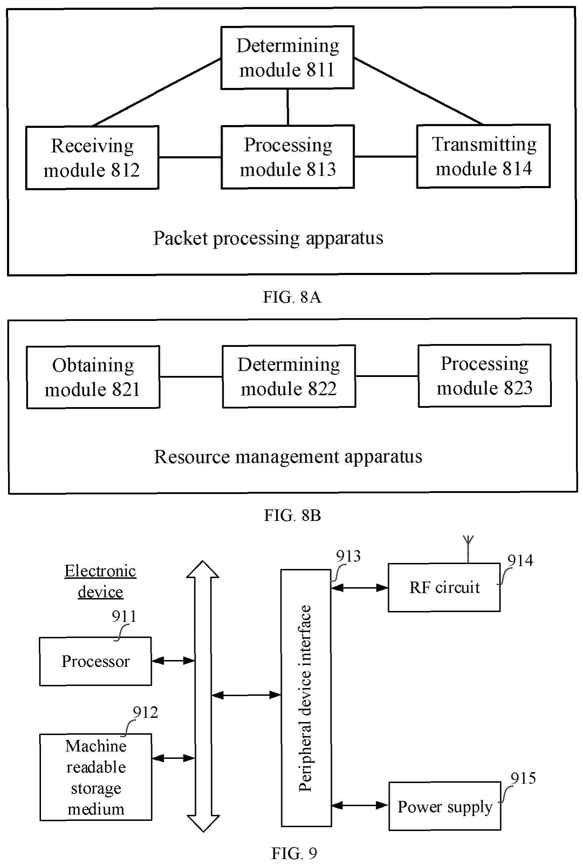

Based on the same application concept as the above method, this embodiment proposes a packet processing apparatus, which is applied to member devices in a cloud group switch. The member device is an NCC, an NCF, or an NCP. As shown in FIG. 8A, FIG. 8A is a structural schematic diagram of the apparatus. The apparatus includes:
a determining module 811, a receiving module 812, a processing module 813, and a transmitting module 814; where the determining module 811 is configured to determine identity information of the member device in the cloud cluster switch;
where in a case that the identity information indicates that the member device is a first NCP,
the receiving module 812 is configured to receive a first protocol packet transmitted by a server If through a first port;
the processing module 813 is configured to add local port information of the first port into the first protocol packet to obtain a second protocol packet;
the transmitting module 814 is configured to transmit the second protocol packet to an NCC;
where in a case that the identity information indicates that the member device is an NCC,
the receiving module 812 is configured to receive the second protocol packet;
the processing module 813 is configured to determine global port information of the first port based on the local port information of the first port; and establish a first forwarding entry, where the first forwarding entry includes address information of the server in the first protocol packet and the global port information of the first port; and
the transmitting module 814 is configured to transmit the first forwarding entry to the first NCP, such that upon receiving a data packet with a destination address being the address information of the server, the first NCP queries the first forwarding entry based on the destination address to obtain the global port information of the first port, and transmits the data packet through the first port.

For example, in a case that the identity information indicates that the member device is a first NCP,
the processing module 813 is also used to establish a first internal channel with the NCC;
the transmitting module 814 is also used to transmit a first registration message to the NCC through the first internal channel, where the first registration message includes local port information of the first port;
in a case that the identity information indicates that the member device is an NCC,
the receiving module 812 is also used to receive the first registration message;
the processing module 813 is also used to configure global port information for the first port and record the corresponding relationship between the local port information of the first port and the global port information of the first port in the port mapping table.

For example, in a case that the identity information indicates that the member device is an NCC,
the transmitting module 814 is also used to transmit the first forwarding entry to the second NCP;
in a case that the identity information indicates that the member device is a second NCP,
the processing module 813 is also used to query the first forwarding entry based on the destination address if a data packet with the address information of the server is received, obtain the global port information of the first port, and encapsulate the global port information of the first port into the data packet;
the transmitting module 814 is also used to transmit encapsulated data packets to NCF.

For example, in a case that the identity information indicates that the member device is an NCC,

The processing module 813 is also used to determine global port information of a second port of an NCF, where the NCF is connected to the first NCP through the second port; establish a second forwarding entry and transmit the second forwarding entry to the NCF, where the second forwarding entry includes the global port information of the first port and the global port information of the second port;
If the identity information indicates that the member device is NCF; the receiving module 812 is also used to receive a data packet, where the data packet includes the global port information of the first port; and the processing module 813, is also used to query the second forwarding entry to obtain the global port information of the second port; and the transmitting module 814 is also used to transmit the data packet through the second port.

For example, in a case that the identity information indicates that the member device is an NCF,
the processing module 813 is also used to establish a second internal channel with the NCC;
the transmitting module 814 is also used to transmit a second registration message to the NCC through the second internal channel, where the second registration message includes local port information of the second port and information of the first NCP connected to the second port;
in a case that the identity information indicates that the member device is an NCC,
the receiving module 812 is also used to receive the second registration message;
the processing module 813 is also used to configure global port information for the second port, and record the corresponding relationship between the local port information of the second port, the global port information of the second port, and the information of the first NCP in the port mapping table.

For example, when the first member device joins the cloud cluster switch,
in a case that the identity information indicates that the member device is an NCC,
the processing module 813 is also used to establish a third internal channel with the first member device;
the receiving module 812 is also used to receive the third registration message transmitted by the first member device through the third internal channel;
the transmitting module 814 is also used to in response to determining that the first member device is a second NCP and the third registration message is received, transmit the first forwarding entry to the second NCP; and in response to determining that the first member device is an NCF and the third registration message is received, transmit the second forwarding entry to the NCF.

For example, when the second member device leaves the cloud cluster switch and the second member device is the first NCP;
in a case that the identity information indicates that the member device is an NCC,

The processing module 813 is also used to obtain a third forwarding entry and a fourth forwarding entry corresponding to the second member device, where the third forwarding entry includes the address information of a server and global port information of a port on the second member device, and the fourth forwarding entry includes the global port information of the port on the second member device and global port information of a port on the NCF;
the transmitting module 814 is also used to transmit a first delete instruction to all second NCPs, where the first delete instruction is configured to cause each second NCP to delete the third forwarding entry corresponding to the second member device; and
the transmitting module 814 is also used to transmit a second delete instruction to all NCFs, where the second delete instruction is configured to cause each NCF to delete the fourth forwarding entry corresponding to the second member device.

For example, if the identity information indicates that the member device is an NCP, the NCP is either the first NCP or the second NCP;
the transmitting module 814 is also used to periodically transmit a first heartbeat message to the NCC through a first internal channel, where the first heartbeat message includes resource information of the NCP;
in a case that the identity information indicates that the member device is an NCC,
the receiving module 812 is also used to receive the first heartbeat message;
the transmitting module 814 is also used to, in response to determining that the resource information of the NCP indicates that remaining available resources of the NCP are less than a first threshold, display a first alarm information, where the first alarm information is configured to prompt a scale-out for NCPs of the cloud cluster switch; or in response to determining that the resource information of the NCP indicates that remaining available resources of the NCP are greater than a second threshold, display a second alarm information, where the second alarm information is configured to prompt a scale-in for NCPs of the cloud cluster switch.

For example, in a case that the identity information indicates that the member device is an NCF,
the transmitting module 814 is also used to periodically transmit a second heartbeat message to the NCC through a second internal channel, where the second heartbeat message includes resource information of the NCF;
in a case that the identity information indicates that the member device is an NCC,
the receiving module 812 is also used to receive the second heartbeat message;
the transmitting module 814 is also used to, in response to determining that the resource information of the NCF indicates that remaining available resources of the NCF are less than a third threshold, display a third alarm information, where the third alarm information is configured to prompt a scale-out for the NCF of the cloud cluster switch; or in response to determining that the resource information of the NCF indicates that remaining available resources of the NCF are greater than a fourth threshold, display a fourth alarm information, where the fourth alarm information is configured to prompt a scale-in for the NCF of the cloud cluster switch.

Based on the same application concept as the above method, the present embodiment proposes a resource management apparatus. As shown in FIG. 8B, FIG. 8B is a structural schematic diagram of the apparatus. The apparatus includes: an obtaining module 821, configured to obtain target resource data of a cloud cluster switch, where the target resource data includes one or more of network element-level resource data, network-level resource data, application-level resource data, or service resource data; and obtain initial demand resource information of a user, where the initial demand resource information represents expected occupied resources; a determining module 822, configured to determine, based on the target resource data and the initial demand resource information, target demand resource information of the user, where the target demand resource information represents resources actually allocated to the user; and a processing module 823, configured to transmit the target demand resource information to the cloud cluster switch, such that the cloud cluster switch allocates available resources to the user based on the target demand resource information when receiving a data packet for the user, and processes the data packet based on the available resources.

For example, the network-level resource data includes resource data of the cloud cluster switch, and the resource data of the cloud cluster switch includes overall network utilization rate, network capacity, and network health of the cloud cluster switch; and the network element-level resource data includes resource data of each member device in the cloud cluster switch, where a member device in the cloud cluster switch is an NCC, an NCF, or an NCP, where the resource data of the member device includes a physical resource utilization rate, a logical resource utilization rate, and a health level of the member device.

For example, the application-level resource data includes network quality when the cloud cluster switch forwards a data packet, where the network quality includes one or more of a packet loss rate, latency, or jitter;
Where the obtaining module 821, when obtaining the application-level resource data for the cloud cluster switch, is specifically used to: receive an RPC protocol packet transmitted by an RPC module of a member device within the cloud cluster switch, where the RPC protocol packet includes a monitoring indicator counted by the member device, where the member device is an NCC, an NCF, or an NCP, and the member device includes an SQA module, an eMDI module, and the RPC module, where the SQA module transmits a specified type of a target traffic characteristic to the eMDI module, where the specified type includes an audio type and/or a video type; where when the eMDI module receives a data packet that matches the target traffic characteristic, the eMDI module counts a monitoring indicator of the data packet and transmits the monitoring indicator to the SQA module, the SQA module transmits the monitoring indicator to the RPC module, and the RPC module generates the RPC protocol packet containing the monitoring indicator;
determining, based on the monitoring indicator counted by each member device, the application-level resource data.

For example, the service resource data includes resource data of servers accessing the cloud cluster switch; if the server is a GPU, the service resource data includes the computing performance of the GPU and/or the memory bandwidth of the GPU;
the computing performance represents a theoretical computing capability of the GPU when processing data of different accuracies; and
the memory bandwidth represents a data transmitting speed provided by the GPU when processing large-scale data.

For example, in response to determining that the initial demand resource information includes expected occupied resources for the cloud cluster switch, and the target resource data indicates that available resources of the cloud cluster switch are greater than a first resource threshold, determining that the target demand resource information is greater than the initial demand resource information, such that available resources allocated to the user are greater than the expected occupied resources; or
in response to determining that the target resource data indicates that available resources of the cloud cluster switch are less than a second resource threshold, determining that the target demand resource information is less than the initial demand resource information, such that available resources allocated to the user are less than the expected occupied resources.

For example, in response to determining that the initial demand resource information includes expected occupied resources for a server coupled with the cloud cluster switch, and the target resource data indicates that the available resources of the server are greater than a third resource threshold, determining that the target demand resource information is greater than the initial demand resource information, such that available resources allocated to the user are greater than the expected occupied resources; or
in response to determining that the target resource data indicates that available resources of the server are less than a fourth resource threshold, determining that the target demand resource information is less than the initial demand resource information, such that available resources allocated to the user are less than the expected occupied resources.

Based on the same application concept as the above method, this embodiment proposes an electronic device (such as a member device or management device in a cloud cluster switch, where the member device is an NCC, an NCF, or an NCP), as shown in FIG. 9. The electronic device includes a processor 911 and a machine-readable storage medium 912, which stores machine executable instructions that can be executed by the processor 911; the processor 911 is used to execute machine executable instructions to implement the packet processing method or resource management method described in the above examples of the present disclosure.

In an example, processor 911 may include one or more processing cores, such as a 4-core processor, an 8-core processor, etc. The processor 911 can be implemented in at least one hardware form of DSP (Digital Signal Processing), FPGA (Field Programmable Gate Array), or PLA (Programmable Logic Array).

The processor 911 can further include a main processor and a coprocessor. The main processor is configured to process data in a wake-up state, also known as a Central Processing Unit (CPU). The coprocessor is a low-power processor configured to process data in standby mode.

In some embodiments, the processor 911 may be integrated with a GPU (Graphics Processing Unit), which is responsible for rendering the content that needs to be displayed on a display screen.

In an example, the electronic device may also optionally include a peripheral device interface 913 and at least one peripheral device. The processor 911, and the peripheral device interface 913 can be coupled through a bus or signal line. Each peripheral device can be coupled to the peripheral device interface 913 through a bus, signal line, or circuit board. The peripheral device may include at least one of RF circuit 914 or power supply 915.

RF (Radio Frequency) circuit 914 is configured to receive and transmit RF signals, also known as electromagnetic signals. RF circuit 914 communicates with a communication network and other communication devices through electromagnetic signals. The RF circuit 914 converts electrical signals into electromagnetic signals for transmission, or converts the received electromagnetic signals into electrical signals. In some embodiments, the RF circuit 914 includes an antenna system, an RF transceiver, one or more amplifiers, a tuner, an oscillator, a digital signal processor, a user identity module card, and the like.

The RF circuit 914 can communicate with user equipment through at least one wireless communication protocol. The wireless communication protocol includes but is not limited to the World Wide Web, metropolitan area networks, intranets, various generations of mobile communication networks (2G, 3G, 4G, and 5G), wireless local area networks, and/or WiFi (Wireless Fidelity) networks. The power supply 915 is used to provide power to various components in electronic devices. The power supply 915 can be AC, DC, disposable batteries, or rechargeable batteries.

According to the same concept as the above method, the embodiments of the present disclosure further provides a machine readable storage medium, on which a number of computer instructions are stored. When the computer instructions are executed by the processor, the packet processing method or resource managing method according to any one of the above embodiments of the present disclosure can be implemented.

For example, the machine readable storage medium can be any electronic, magnetic, optical, or other physical storage device that can contain or store information such as executable instructions, data, and so on. For example, the machine readable storage medium may be a Radom Access Memory (RAM), a volatile memory, a non-volatile memory, a flash memory, a storage drive (e.g. hard disk drive), a solid state harddisk, any type of storage disk (e.g., compact disk, Digital Video Disk (DVD)), or a similar storage medium, or a combination thereof.

Based on the same application concept as the above method, the present embodiment also provides a computer program product, which may include a computer program; where when the computer program is executed by the processor, the above packet processing method or resource management method is implemented.

Those skilled in the art should understand that embodiments of the present disclosure can be provided as methods, systems, or computer program products. Accordingly, the present disclosure may take the form of an entirely hardware embodiment, an entirely software embodiment, or an embodiment combining software and hardware aspects. Furthermore, the embodiments of the present disclosure may employ the form of a computer program product implemented on one or more computer-usable storage media (including, but not limited to, disk storage, CD-ROM, optical storage, etc.), where the one or more computer-usable storage media having computer-usable program code.

The above description is only embodiments of the present disclosure and is not intended to limit the present disclosure. For those skilled in the art, various modifications and changes may be made in the present disclosure. Any modification, equivalent replacement, improvement, etc. present the spirit and principle of the present disclosure shall be included in the scope of the claims of the present disclosure.

## Claims

1. A packet processing method, applied to a member device in a cloud cluster switch, wherein the member device comprises an NCC, an NCF or an NCP, and the method comprises:
determining identity information of the member device in the cloud cluster switch;
in response to determining that the identity information indicates that the member device is a first NCP and a first protocol packet transmitted by a server is received through a first port, adding local port information of the first port to the first protocol packet to obtain a second protocol packet, and transmitting the second protocol packet to an NCC; and
in response to determining that the identity information indicates that the member device is an NCC and the second protocol packet is received, determining global port information of the first port based on the local port information of the first port; establishing a first forwarding entry, wherein the first forwarding entry comprises address information of the server in the first protocol packet and the global port information of the first port; and transmitting the first forwarding entry to the first NCP, such that the first NCP, upon receiving a data packet with a destination address being the address information of the server, queries the first forwarding entry based on the destination address to obtain the global port information of the first port, and transmits the data packet through the first port.

2. The method according to claim 1, wherein before determining the global port information of the first port based on the local port information of the first port, the method further comprises:
in response to determining that the identity information indicates that the member device is a first NCP, establishing a first internal channel with the NCC, and transmitting a first registration message to the NCC through the first internal channel, wherein the first registration message comprises local port information of the first port; and
in response to determining that the identity information indicates that the member device is an NCC and the first registration message is received, configuring the global port information for the first port, and recording, in a port mapping table, a corresponding relationship between the local port information of the first port and the global port information of the first port.

3. The method according to claim 1, wherein after establishing the first forwarding entry, the method further comprises: transmitting the first forwarding entry to a second NCP; and
in response to determining that the identity information indicates that the member device is a second NCP and the data packet with the destination address being the address information of the server is received, querying the first forwarding entry based on the destination address to obtain the global port information of the first port, encapsulating the global port information of the first port into the data packet, and transmitting an encapsulated data packet to an NCF.

4. The method according to claim 3, wherein after determining the global port information of the first port based on the local port information of the first port, the method further comprises:
in response to determining that the identity information indicates that the member device is an NCC, determining global port information of a second port of an NCF, wherein the NCF is connected to the first NCP through the second port;
establishing a second forwarding entry and transmitting the second forwarding entry to the NCF, wherein the second forwarding entry comprises the global port information of the first port and the global port information of the second port; and
in response to determining that the identity information indicates that the member device is an NCF and a received data packet comprises the global port information of the first port, querying the second forwarding entry to obtain the global port information of the second port, and transmitting the data packet through the second port.

5. The method according to claim 4, wherein before determining the global port information of the second port of the NCF, the method further comprises:
in response to determining that the identity information indicates that the member device is an NCF, establishing a second internal channel with the NCC, and transmitting a second registration message to the NCC through the second internal channel, wherein the second registration message comprises local port information of the second port and information of a first NCP connected to the second port; and
in response to determining that the identity information indicates that the member device is an NCC and the second registration message is received, configuring the global port information for the second port, and recording, in a port mapping table, a corresponding relationship between the local port information of the second port, the global port information of the second port, and the information of the first NCP.

6. The method according to claim 1, wherein the NCP comprises an application container and a routing container, and the NCC comprises an application container and a routing container, wherein the application container of the first NCP is for receiving the first protocol packet and transmitting the first protocol packet to the routing container of the first NCP, and the routing container of the first NCP is for adding the local port information of the first port to the first protocol packet to obtain the second protocol packet, and transmitting the second protocol packet to the routing container of the NCC; and
the routing container of the NCC is for receiving the second protocol packet and transmitting the second protocol packet to the application container of the NCC, and the application container of the NCC is for determining the global port information of the first port, establishing the first forwarding entry, and transmitting the first forwarding entry to the application container of the first NCP.

7. The method according to any one of claims 1-6, wherein when a first member device joins the cloud cluster switch, the method further comprises:
in response to determining that the identity information indicates that the member device is an NCC, establishing a third internal channel with the first member device and receiving a third registration message transmitted by the first member device through the third internal channel;
in response to determining that the first member device is a second NCP and the third registration message is received, transmitting the first forwarding entry to the second NCP; and
in response to determining that the first member device is an NCF and the third registration message is received, transmitting the second forwarding entry to the NCF.

8. The method according to any one of claims 1-6, wherein when a second member device leaves the cloud cluster switch, the method further comprises:
in response to determining that the identity information indicates that the member device is an NCC and the second member device is a first NCP, obtaining a third forwarding entry and a fourth forwarding entry corresponding to the second member device, wherein the third forwarding entry comprises the address information of a server and global port information of a port on the second member device, and the fourth forwarding entry comprises the global port information of the port on the second member device and global port information of a port on the NCF;
transmitting a first delete instruction to all second NCPs, wherein the first delete instruction is configured to cause each second NCP to delete the third forwarding entry corresponding to the second member device; and
transmitting a second delete instruction to all NCFs, wherein the second delete instruction is configured to cause each NCF to delete the fourth forwarding entry corresponding to the second member device.

9. The method according to any one of claims 1-6, further comprising:
in response to determining that the identity information indicates that the member device is an NCP and the NCP is a first NCP or a second NCP, periodically transmitting a first heartbeat message to the NCC through a first internal channel, wherein the first heartbeat message comprises resource information of the NCP;
in response to determining that the identity information indicates that the member device is an NCC, receiving the first heartbeat message; and
in response to determining that the resource information of the NCP indicates that remaining available resources of the NCP are less than a first threshold, displaying a first alarm information, wherein the first alarm information is configured to prompt a scale-out for NCPs of the cloud cluster switch; or in response to determining that the resource information of the NCP indicates that remaining available resources of the NCP are greater than a second threshold, displaying a second alarm information, wherein the second alarm information is configured to prompt a scale-in for NCPs of the cloud cluster switch.

10. The method according to any one of claims 1-6, further comprising:
in response to determining that the identity information indicates that the member device is an NCF, periodically transmitting a second heartbeat message to the NCC through a second internal channel, wherein the second heartbeat message comprises resource information of the NCF;
in response to determining that the identity information indicates that the member device is an NCC, receiving the second heartbeat message; and
in response to determining that the resource information of the NCF indicates that remaining available resources of the NCF are less than a third threshold, displaying a third alarm information, wherein the third alarm information is configured to prompt a scale-out for the NCF of the cloud cluster switch; or in response to determining that the resource information of the NCF indicates that remaining available resources of the NCF are greater than a fourth threshold, displaying a fourth alarm information, wherein the fourth alarm information is configured to prompt a scale-in for the NCF of the cloud cluster switch.

11. A resource management method, comprising:
obtaining target resource data of a cloud cluster switch, wherein the target resource data comprises one or more of network element-level resource data, network-level resource data, application-level resource data, or service resource data;
obtaining initial demand resource information of a user, wherein the initial demand resource information represents expected occupied resources;
determining, based on the target resource data and the initial demand resource information, target demand resource information of the user, wherein the target demand resource information represents resources actually allocated to the user; and
transmitting the target demand resource information to the cloud cluster switch, such that the cloud cluster switch allocates available resources to the user based on the target demand resource information when receiving a data packet for the user, and processes the data packet based on the available resources.

12. The method according to claim 11, wherein the network-level resource data comprises resource data of the cloud cluster switch, and the resource data of the cloud cluster switch comprises overall network utilization rate, network capacity, and network health of the cloud cluster switch; and
the network element-level resource data comprises resource data of each member device in the cloud cluster switch, wherein a member device in the cloud cluster switch is an NCC, an NCF, or an NCP, wherein the resource data of the member device comprises a physical resource utilization rate, a logical resource utilization rate, and a health-level of the member device.

13. The method according to claim 11, wherein
the application-level resource data comprises network quality when the cloud cluster switch forwards a data packet, wherein the network quality comprises one or more of a packet loss rate, latency, or jitter;
wherein obtaining the application-level resource data corresponding to the cloud cluster switch comprises:
receiving an RPC protocol packet transmitted by an RPC module of a member device within the cloud cluster switch, wherein the RPC protocol packet comprises a monitoring indicator counted by the member device, wherein the member device is an NCC, an NCF, or an NCP, and the member device comprises an SQA module, an eMDI module, and the RPC module, wherein the SQA module transmits a specified type of a target traffic characteristic to the eMDI module, wherein the specified type comprises an audio type and/or a video type; wherein when the eMDI module receives a data packet that matches the target traffic characteristic, the eMDI module counts a monitoring indicator of the data packet and transmits the monitoring indicator to the SQA module, the SQA module transmits the monitoring indicator to the RPC module, and the RPC module generates the RPC protocol packet containing the monitoring indicator;
determining, based on the monitoring indicator counted by each member device, the application-level resource data.

14. The method according to claim 11, wherein the service resource data comprises resource data of a server coupled with the cloud cluster switch;
in a case that the server is a GPU, the service resource data comprises computing performance of the GPU and/or memory bandwidth of the GPU; wherein
the computing performance represents a theoretical computing capability of the GPU when processing data of different accuracies; and
the memory bandwidth represents a data transmitting speed provided by the GPU when processing large-scale data.

15. The method according to any one of claims 11-14, wherein determining the target demand resource information of the user comprises:
in response to determining that the initial demand resource information comprises expected occupied resources for the cloud cluster switch, and the target resource data indicates that available resources of the cloud cluster switch are greater than a first resource threshold, determining that the target demand resource information is greater than the initial demand resource information, such that available resources allocated to the user are greater than the expected occupied resources; or
in response to determining that the target resource data indicates that available resources of the cloud cluster switch are less than a second resource threshold, determining that the target demand resource information is less than the initial demand resource information, such that available resources allocated to the user are less than the expected occupied resources.

16. The method according to any one of claims 11-14, wherein determining the target demand resource information of the user comprises:
in response to determining that the initial demand resource information comprises expected occupied resources for a server coupled with the cloud cluster switch, and the target resource data indicates that the available resources of the server are greater than a third resource threshold, determining that the target demand resource information is greater than the initial demand resource information, such that available resources allocated to the user are greater than the expected occupied resources; or
in response to determining that the target resource data indicates that available resources of the server are less than a fourth resource threshold, determining that the target demand resource information is less than the initial demand resource information, such that available resources allocated to the user are less than the expected occupied resources.

17. A packet processing apparatus, applied to a member device in a cloud cluster switch, wherein the member device comprises an NCC, an NCF or an NCP, and the apparatus comprises:
a determining module, a receiving module, a processing module, and a transmitting module; wherein
the determining module is configured to determine identity information of the member device in the cloud cluster switch;
wherein in a case that the identity information indicates that the member device is a first NCP,
the receiving module is configured to receive a first protocol packet transmitted by a server through a first port;
the processing module is configured to add local port information of the first port into the first protocol packet to obtain a second protocol packet;
the transmitting module is configured to transmit the second protocol packet to an NCC;
wherein in a case that the identity information indicates that the member device is an NCC,
the receiving module is configured to receive the second protocol packet;
the processing module is configured to determine global port information of the first port based on the local port information of the first port; and establish a first forwarding entry, wherein the first forwarding entry comprises address information of the server in the first protocol packet and the global port information of the first port; and
the transmitting module is configured to transmit the first forwarding entry to the first NCP, such that upon receiving a data packet with a destination address being the address information of the server, the first NCP queries the first forwarding entry based on the destination address to obtain the global port information of the first port, and transmits the data packet through the first port.

18. A resource management apparatus, comprising:
an obtaining module, configured to obtain target resource data of a cloud cluster switch, wherein the target resource data comprises one or more of network element-level resource data, network-level resource data, application-level resource data, or service resource data; and obtain initial demand resource information of a user, wherein the initial demand resource information represents expected occupied resources;
a determining module, configured to determine, based on the target resource data and the initial demand resource information, target demand resource information of the user, wherein the target demand resource information represents resources actually allocated to the user; and
a processing module, configured to transmit the target demand resource information to the cloud cluster switch, such that the cloud cluster switch allocates available resources to the user based on the target demand resource information when receiving a data packet for the user, and processes the data packet based on the available resources.

19. A member device in a cloud cluster switch, wherein the member device is an NCC, an NCF or an NCP, and comprises: one or more processors and one or more machine-readable storage media, wherein the one or more machine-readable storage media store machine executable instruction that can be executed by the one or more processors, and the one or more processors execute the machine executable instructions to implement the method according to any one of claims 1-10.

20. A management device, comprising: one or more processors and one or more machine-readable storage media, wherein the one or more machine-readable storage media store machine executable instructions that can be executed by the one or more processors, and the one or more processors execute the machine executable instructions to implement the method according to any one of claims 11-16.
